(19) 

Europäisches Patentamt
European Patent Office
Office européen des brevets

(11) **EP 4 566 732 A1**

(12) **EUROPEAN PATENT APPLICATION**
published in accordance with Art. 153(4) EPC

(43) Date of publication:
**11.06.2025 Bulletin 2025/24**

(21) Application number: **23849858.8**

(22) Date of filing: **13.07.2023**

(51) International Patent Classification (IPC):
**B21B 1/22** (2006.01)    **B21B 3/00** (2006.01)
**B23K 20/04** (2006.01)    **B32B 15/01** (2006.01)

(52) Cooperative Patent Classification (CPC):
**B21B 1/22; B21B 3/00; B23K 20/04; B32B 15/01**

(86) International application number:
**PCT/JP2023/025821**

(87) International publication number:
**WO 2024/029299 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.08.2022 JP 2022123599**

(71) Applicant: **Proterial, Ltd.
Tokyo 135-0061 (JP)**

(72) Inventors:
• **IWAMA Shohei
Suita-shi, Osaka 564-0043 (JP)**
• **HARA Yuya
Suita-shi, Osaka 564-0043 (JP)**
• **KODAMA Kenji
Suita-shi, Osaka 564-0043 (JP)**

(74) Representative: **Becker, Eberhard
Becker Kurig & Partner
Patentanwälte mbB
Bavariastraße 7
80336 München (DE)**

(54) **CLAD MATERIAL AND CLAD MATERIAL MANUFACTURING METHOD**

(57)    Provided are a clad material and a clad material manufacturing method, with which a 50% or greater weight reduction can be achieved compared to pure copper material (C1020) while minimizing electrical resistance, said clad material preferably being suitable as a conductor for alternating current. This clad material is configured by layering and pressure-bonding a first copper layer, an aluminum layer, and a second copper layer in this order, and satisfies the expressions $0.5 \text{ mm} \leq T_P \leq 2.0 \text{ mm}$, $6 \leq T_A/T_{C1} \leq 26$, $6 \leq T_A/T_{C2} \leq 26$, $1.0 \leq T_{C1MAX}/T_{C1MIN} \leq 3.0$, and $1.0 < T_{C2MAX}/T_{C2MIN} < 3.0$, where $T_P$ is the average total thickness, $T_A$ is the average thickness of the aluminum layer, $T_{C1}$ is the average thickness of the first copper layer, $T_{C1MAX}$ is the maximum thickness and $T_{C1MIN}$ is the minimum thickness of the first copper layer in the measurement range for the average thickness $T_{C1}$, $T_{C2}$ is the average thickness of the second copper layer, and $T_{C2MAX}$ is the maximum thickness and $T_{C2MIN}$ is the minimum thickness of the second copper layer in the measurement range for the average thickness $T_{C2}$.

$$T_P = T_{C1} + T_A + T_{C2}$$

FIG. 1

EP 4 566 732 A1

## Description

Technical Field

The present invention relates to a clad material and a clad material manufacturing method, and relates to, for example, a clad material suitable for a conductor for alternating current and a manufacturing method of the clad material.

Related Art

For example, in electrical devices and electronic devices (hereinafter referred to as current devices) such as vehicle-mounted devices, portable communication devices, portable chargers, wireless power supplies, etc., a pure copper material made of C1020 or C1100 of JIS standard, which has low electrical resistance and excellent conductivity, is widely used regardless of whether the current is direct current or alternating current. Such current devices strongly require weight reduction to reduce a load during movement or during carrying. Thus, in place of the pure copper material with a high specific gravity of 8.94, it is proposed to use an aluminum material made of A1050 or A1100 of JIS standard, which has a specific gravity of about 2.7 and is about 70% lighter than pure copper. The aluminum material is sufficiently inexpensive compared to the pure copper material, and the use thereof, if made possible, also contributes to cost reduction of the current device. Although the aluminum material has a lower specific gravity than the pure copper material and is advantageous for weight reduction of the current device, the aluminum material has higher electrical resistance than the pure copper material, and may not achieve electrical properties required by the current device. Relating to electrical resistance, if expressed in conductivity, for example, the conductivity of A1050 is about 60% IACS compared to about 100% IACS of C1020.

Thus, instead of replacing all of the pure copper material with the aluminum material, it is thought effective to replace a part of the pure copper material with the aluminum material to use a clad material composed of the pure copper material and the aluminum material. For example, Patent Literature 1 discloses a clad material of a three-layer structure (copper layer/aluminum layer/copper layer). In this clad material, an overall thickness is 0.25 to 4 mm, a copper layer thickness is 0.01 to 0.8 mm, and an aluminum layer thickness is 0.2 to 2 mm. This clad material has an alloy layer with a thickness of 0.01 to 0.4 mm between the copper layer and the aluminum layer. This clad material is manufactured by warm rolling (clad rolling) in which a copper plate, an aluminum plate, and a copper plate are pressure-bonded while heated in a sequentially laminated state, considering the difference in deformation resistance during pressure-boding. The deformation resistance of the aluminum plate is disclosed, for example, in Non-Patent Literature 1.

Related Art Literature

Patent Literature

Patent Literature 1: Japanese Patent Application Laid-Open No. 2013-143257

Non-Patent Literature

Non-Patent Literature 1: Flow Curves of Some Aluminum and Its Alloys, Authors (Kenji Nakanishi, Shunpei Kamitani, Kouki Nakahara, Yoshikazu Shimizu, and Takehiko Matsuda), Kagoshima University Repository Contents (http://hdl.handle.net/10232/510), The research reports of the Faculty of Engineering, Kagoshima University (1999, No. 41, pages 1-5)

SUMMARY OF INVENTION

Problem to Be Solved by Invention

In the clad material of a three-layer structure (copper layer/aluminum layer/copper layer) described above, to achieve further weight reduction without changing the overall thickness, it is proposed to relatively reduce the thicknesses of the copper layers by increasing X, which is a thickness ratio of the aluminum layer, when a thickness ratio (copper layer: aluminum layer: copper layer) of the three layers is expressed as 1:X:1. For example, to replace the pure copper material made of C1020 with a clad material composed of a copper layer made of C1020, an aluminum layer made of A1050, and a copper layer made of C1020 to achieve a weight reduction of 50% or more, it is sufficient to configure a clad material that satisfies $X \geq 5$.

When manufacturing a clad material of a three-layer structure (copper layer/aluminum layer/copper layer) satisfying $X \geq 5$ by rolling, thickness variation (undulation) may occur in the copper layers. In the case where excessive undulation occurs in the copper layers, the aluminum layer may displace the copper layers, and a part of the aluminum layer may be exposed from the surface of the clad material. If the aluminum layer is exposed from the surface of the clad material, the exposed portion of the aluminum layer easily corrodes due to the natural potential difference generated between the aluminum layer exposed on the surface and the surrounding copper layer. In response to this problem of surface exposure of the aluminum layer, an increase in the thickness of the copper layers is considered, but this is unsatisfactory because the weight reduction effect obtained by replacing the pure copper material with the clad material decreases.

An objective of the present invention is to provide a clad material of a three-layer structure (copper layer/aluminum layer/copper layer) and a clad material manufacturing method capable of achieving a weight reduction of 50% or more (preferably 55% or more) compared to pure copper material (C1020) while suppressing electrical resistance to be small, and desirably, to provide a clad material and a clad material manufacturing method suitable for a conductor for alternating current.

Means for Solving Problem

The inventors of the present invention carefully examined and studied the relationship between thickness variation (undulation) of the copper layers constituting the clad material and surface exposure of the aluminum layer, and were able to determine an upper limit of undulation of the copper layers with which surface exposure of the aluminum layer is less likely to occur. Then, through subsequent diligent efforts, the inventors discovered manufacturing conditions for the clad material that can suppress occurrence of excessive undulation of the copper layers, thus leading to the present invention.

In other words, a clad material according to the present invention is a clad material including a first copper layer, an aluminum layer, and a second copper layer sequentially laminated and pressure-bonded. In a case where an average total thickness of the clad material is $T_P$, an average layer thickness of the aluminum layer is $T_A$, an average layer thickness of the first copper layer is $T_{C1}$, a maximum layer thickness and a minimum layer thickness of the first copper layer in a measurement target range of the average layer thickness $T_{C1}$ are $T_{C1MAX}$ and $T_{C1MIN}$, an average layer thickness of the second copper layer is $T_{C2}$, and a maximum layer thickness and a minimum layer thickness of the second copper layer in a measurement target range of the average layer thickness $T_{C2}$ are $T_{C2MAX}$ and $T_{C2MIN}$, the clad material satisfies $0.5\,\mathrm{mm} \leq T_P \leq 2.0\,\mathrm{mm}$, satisfies $6 \leq T_A/T_{C1} \leq 26$ and $6 \leq T_A/T_{C2} \leq 26$, and satisfies $1.0 \leq T_{C1MAX}/T_{C1MIN} \leq 3.0$ and $1.0 \leq T_{C2mAX}/T_{C2MIN} \leq 3.0$.

In the clad material according to the present invention, preferably, an AC impedance value of a sample with a width of 15 mm is measured under a room temperature environment according to a four-terminal-pair method with a distance of 90 mm between voltage electrodes, and an AC volume resistivity obtained using the AC impedance value with a frequency of alternating current being 10 kHz is 20 mΩ•mm or less. In the present invention, a calculated value obtained by dividing a product of an AC impedance value and a cross-sectional area (thickness × width of measurement sample) of a measurement sample by a distance between the voltage electrodes during measurement of the AC impedance value is conveniently referred to as an AC volume resistivity. In addition, the AC impedance value is a value (average value) obtained by placing a sample (e.g., 150 mm in length) with a width of 15 mm in a room temperature environment (e.g., 20°C or more and 30°C or less) and measuring the sample at a predetermined frequency with an LCZ meter according to a four-terminal-pair method with a distance of 90 mm between voltage electrodes.

In the clad material according to the present invention, preferably, an AC impedance value of a sample with a width of 15 mm is measured under a room temperature environment according to a four-terminal-pair method with a distance of 90 mm between voltage electrodes, and an AC volume resistivity obtained using the AC impedance value with a frequency of alternating current being 100 kHz is 200 mΩ•mm or less.

In the clad material according to the present invention, preferably, the aluminum layer includes an A3000 series aluminum alloy (e.g., A3003) of JIS standard containing Mn, an A5000 series aluminum alloy (e.g., A5052) of JIS standard containing Mg, or an A6000 series aluminum alloy (e.g., A6063) of JIS standard containing Mg and Si.

The clad material according to the present invention may be manufactured, for example, according to the following method. In other words, a clad material manufacturing method according to the present invention is a clad material manufacturing method including a preparation process of clad basic materials and a rolling process of a clad material. In the preparation process of the clad basic materials, a first copper plate, an aluminum plate, and a second copper plate are prepared. In a case where an average plate thickness of the first copper plate is $T_{CS1}$ and a Vickers hardness of the first copper plate is $B_{CS1}$, an average plate thickness of the aluminum plate is $T_{AS}$ and a Vickers hardness of the aluminum plate is $B_{AS}$, and an average plate thickness of the second copper plate is $T_{CS2}$ and a Vickers hardness of the second copper plate is $B_{CS2}$, the first copper plate, the aluminum plate, and the second copper plate satisfy $6 \leq T_{AS}/T_{CS1} \leq 26$ and $6 \leq T_{AS}/T_{CS2} \leq 26$ and satisfy $B_{AS}/B_{CS1} \geq 1.0$ and $B_{AS}/B_{CS2} \geq 1.0$. In the rolling process of the clad material, rolling is performed on the first copper plate, the aluminum plate, and the second copper plate prepared in the preparation process of the clad basic materials in a sequentially laminated state to form a clad material in which a first copper layer corresponding to the first copper plate after rolling, an aluminum layer corresponding to the aluminum plate after rolling, and a second copper layer corresponding to the second copper plate after rolling are sequentially laminated and pressure-bonded. In a case where a Vickers hardness of the first copper layer is $B_{C1}$, a Vickers hardness of the aluminum layer is $B_A$, and a Vickers hardness of the second copper layer is $B_{C2}$, the rolling is performed such that $B_A/B_{C1} \geq 0.5$ and $B_A/B_{C2} \geq 0.5$ are satisfied. In a case where an average total thickness of the clad material is $T_P$, an average layer thickness of the aluminum layer is $T_A$, an average layer thickness of the first copper layer is $T_{C1}$, a maximum layer thickness and a minimum layer thickness of the first copper layer in a measurement target range of the average layer thickness $T_{C1}$ are $T_{C1MAX}$ and $T_{C1MIN}$, an average layer thickness of the second copper layer is $T_{C2}$, and a maximum layer thickness and a minimum layer thickness of the second copper layer in a measurement target range of the average layer thickness $T_{C2}$ are $T_{C2MAX}$ and $T_{C2MIN}$, the clad material manufacturing method configures the clad material which satisfies $0.5\,\text{mm} \leq T_P \leq 2.0\,\text{mm}$, satisfies $6 \leq T_A/T_{C1} \leq 26$ and $6 \leq T_A/T_{C2} \leq 26$, and satisfies $1.0 \leq T_{C1MAX}/T_{C1MIN} \leq 3.0$ and $1.0 \leq T_{C2MAX}/T_{C2MIN} \leq 3.0$.

In the clad material manufacturing method according to the present invention, preferably, in the rolling process of the clad material, rolling is performed such that $1.0 \leq T_{C1MAX}/T_{C1MIN} \leq 2.5$ and $1.0 \leq T_{C2MAX}/T_{C2MIN} \leq 2.5$ are satisfied, to form the clad material in which the first copper layer, the aluminum layer, and the second copper layer are sequentially laminated and pressure-bonded.

In the clad material manufacturing method according to the present invention, preferably, the aluminum plate includes an A3000 series aluminum alloy (e.g., A3003) of JIS standard containing Mn, an A5000 series aluminum alloy (e.g., A5052) of JIS standard containing Mg, or an A6000 series aluminum alloy (e.g., A6063) of JIS standard containing Mg and Si.

Effects of Invention

According to the present invention, it is possible to provide a clad material of a three-layer structure (copper layer/aluminum layer/copper layer) and a clad material manufacturing method that achieve a weight reduction of 50% or more (preferably 55% or more) compared to pure copper material (C1020) while suppressing electrical resistance to be small. Also, it is possible to provide a clad material and a clad material manufacturing method suitable for a conductor for alternating current. Accordingly, it becomes possible to, for example, contribute to reduction of a load during carrying or during movement of electrical devices and electronic devices such as vehicle-mounted devices, portable communication devices, portable chargers, wireless power supplies, etc.

BRIEF DESCRIPTION OF THE DRAWINGS

[FIG. 1] is a view showing a configuration example of a clad material according to the present invention.
[FIG. 2] is a view showing a cross-sectional configuration example when the clad material according to the present invention is cut in a thickness direction.
[FIG. 3] is a view showing an example of a form of undulation occurring in copper layers of the clad material.
[FIG. 4] is a view shown to describe a manufacturing method of the clad material according to the present invention.
[FIG. 5] is a view showing a relationship between a hardness ratio of copper plates and an aluminum plate of clad basic materials, and an undulation value of the copper layers of the clad material.
[FIG. 6] (a) is a view showing a relationship between a ratio of layer thickness between the copper layers and the aluminum layer of the clad material, and the undulation value of the copper layers of the clad material. (b) is a view showing a relationship between a ratio of layer thickness between the copper layers and the aluminum layer of the clad material, in which the material of the aluminum layer is equivalent to A5052, and the undulation value of the copper layers of the clad material.
[FIG. 7] (a) is a view showing a relationship between a total thickness of the clad material and the undulation value of the copper layers of the clad material. (b) is a view showing a relationship between the layer thicknesses of the copper layers of the clad material and the undulation value of the copper layers of the clad material. (c) is a view showing a relationship between the layer thickness of the aluminum layer of the clad material and the undulation value of the copper layers of the clad material.

DESCRIPTION OF THE EMBODIMENTS

An example of an embodiment of a clad material according to the present invention will be described with reference to the drawings as appropriate. The clad material according to the present invention is not limited to a configuration illustrated herein, but is indicated by the scope of the claims, namely, interpreted to include all modifications within the meaning and scope equivalent to the scope of the claims.

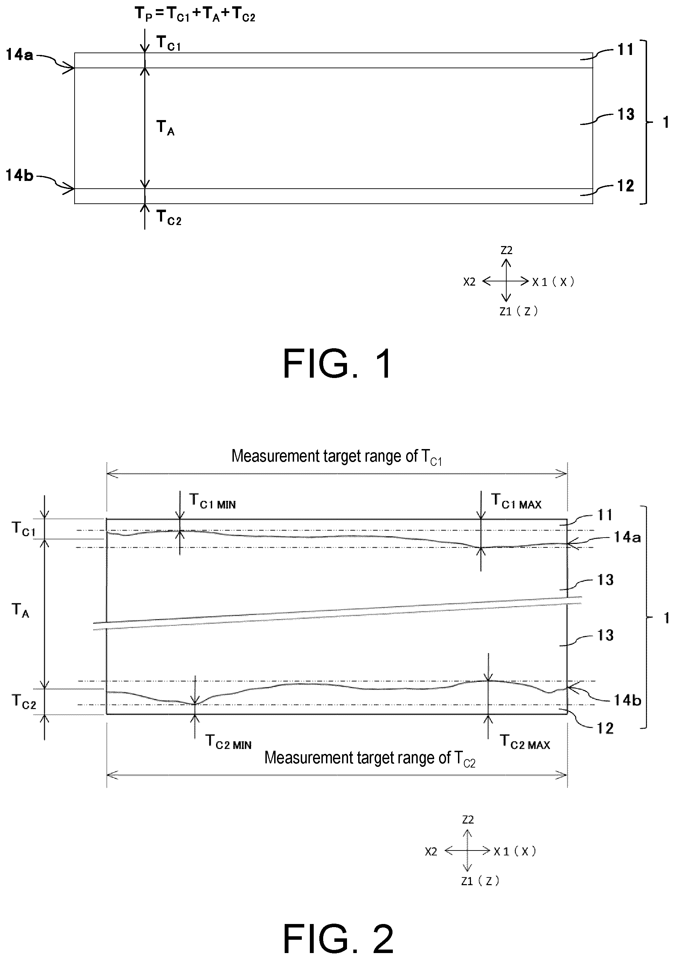

A configuration example of the clad material according to the present invention is shown in FIG. 1. In addition, a cross-sectional configuration example when the clad material according to the present invention is cut in a thickness direction is shown in FIG. 2. In FIG. 1 and FIG. 2, X is a pressure-bonding direction (rolling direction) of a clad material 1, and Z is a lamination direction (thickness direction) of the clad material 1. In addition, a cross-sectional portion of the clad material 1 shown in FIG. 2 corresponds to a measurement target range of average layer thicknesses $T_{C1}$ and $T_{C2}$ of copper layers 11 and 12.

The clad material 1 is a clad material of a three-layer structure (copper layer/aluminum layer/copper layer), composed, as main layers, of a copper layer 11 serving as a first copper layer, an aluminum layer 13, and a copper layer 12 serving as a second copper layer. Depending on an application of the clad material 1, the clad material 1 may also be provided with, for example, an insulating or conductive resin layer or a highly corrosion-resistant metal layer (e.g., a Ni plating layer) on a part or all of surfaces (XY plane) of the copper layers 11 and 12, and on a part or all of end faces (XZ plane or YZ plane) intersecting with the thickness direction (Z direction) of the clad material 1 where the aluminum layer 13 is exposed.

In addition to the main layers described above, the clad material 1 has a diffusion layer 14a between the copper layer 11 and the aluminum layer 13, and a diffusion layer 14b between the copper layer 12 and the aluminum layer 13. The diffusion layers 14a and 14b are visually recognized as being in continuous or discontinuous thin layer shapes in a cross-section (XZ plane) in the thickness direction (Z direction) of the clad material 1, and are not thick layers like the copper layers 11 and 12 and the aluminum layer 13 which are the main layers. Average thicknesses of the diffusion layers 14a and 14b in the clad material 1 are 1 $\mu$m or more and 5 $\mu$m or less. Thus, the diffusion layers 14a and 14b do not substantially affect conductivity (electrical resistance) of the clad material 1. In addition, if the average thicknesses of the diffusion layers 14a and 14b exceed 5 $\mu$m, since cracks originating from intermetallic compounds present in the diffusion layers 14a and 14b are likely to occur, a bonding strength between the copper layers 11 and 12 and the aluminum layer 13 is likely to decrease.

The clad material 1 is composed of the copper layer 11, the aluminum layer 13, and the copper layer 12 laminated and pressure-bonded sequentially. The lamination and pressure-bonding of the copper layer 11, the aluminum layer 13, and the copper layer 12 may be performed according to a specific manufacturing method of the clad material to be described later. Immediately after the lamination and pressure-bonding, the clad material 1 may have a flat plate-shaped form as shown in FIG. 1 and FIG. 2. Such a flat plate-shaped clad material 1 may be processed and formed into a desired shape according to the application. By performing a heat treatment (diffusion annealing) in which elemental diffusion occurs, the laminated and pressure-bonded clad material may have the diffusion layers 14a and 14b described above. By having diffusion layers 14a and 14b of appropriate thicknesses, the clad material 1 has a greater bonding strength between the main layers.

In the flat plate-shaped form of the clad material 1 as shown in FIG. 1 and FIG. 2, when an average total thickness is $T_P$, an average layer thickness of the aluminum layer 13 is $T_A$ (> 0), an average layer thickness of the copper layer 11 is $T_{C1}$ (> 0), a maximum layer thickness and a minimum layer thickness of the copper layer 11 in the measurement target range of the average layer thickness $T_{C1}$ are $T_{C1MAX}$ (> 0) and $T_{C1MIN}$ (> 0), an average layer thickness of the copper layer 12 is $T_{C2}$ (> 0), and a maximum layer thickness and a minimum layer thickness of the copper layer 12 in the measurement target range of the average layer thickness $T_{C2}$ are $T_{C2MAX}$ (> 0) and $T_{C2MIN}$ (> 0),

$$(1)\ 0.5\ \mathrm{mm} \leq T_P \leq 2.0\ \mathrm{mm},$$

$$(2)\ 6 \leq T_A/T_{C1} \leq 26\ \text{and}\ 6 \leq T_A/T_{C2} \leq 26,$$

and

$$(3)\ 1.0 \leq T_{C1MAX}/T_{C1MIN} \leq 3.0\ \text{and}\ 1.0 \leq T_{C2MAX}/T_{C2MIN} \leq 3.0,$$

are satisfied.

$$(1)\ 0.5\ \mathrm{mm} \leq T_P \leq 2.0\ \mathrm{mm}$$

A clad material 1 satisfying 0.5 mm $\leq T_P \leq$ 2.0 mm has an average total thickness $T_P$ of 0.5 mm or more and 2.0 mm or less. The clad material 1 with an average total thickness $T_P$ of 0.5 mm or more and 2.0 mm or less is advantageous in achieving weight reduction while ensuring electrical properties of a current device when used as, for example, a conductor in a current device involving movement or carrying. A clad material with an average total thickness $T_P$ of less than 0.5 mm

($T_P$ < 0.5 mm) is advantageous for weight reduction since the weight decreases as the thickness decreases, but is disadvantageous in practical use since a mechanical strength decreases as the thickness decreases. Specifically, a clad material with an excessively small thickness is likely to deform during handling thereof and is likely to become a cause of damage when shock or vibration is applied to the current device in which the clad material is incorporated. In addition, a clad material with an average total thickness $T_P$ exceeding 2.0 mm ($T_P$ > 2.0 mm) is advantageous in practical use since the mechanical strength improves as the thickness increases, but is disadvantageous for weight reduction since the weight increases as the thickness increases. A measurement method of the average total thickness $T_P$ of the clad material 1 will be described later.

$$(2)\ 6 \leq T_A/T_{C1} \leq 26\ \text{and}\ 6 \leq T_A/T_{C2} \leq 26$$

Compared to a clad material satisfying $T_A/T_{C1}$ < 6, a clad material satisfying $6 \leq T_A/T_{C1} \leq 26$ and $6 \leq T_A/T_{C2} \leq 26$ has a larger layer thickness ($T_A$) of the aluminum layer with respect to a total layer thickness ($T_{C1} + T_{C2}$) of the copper layers, and thus a proportion of copper in the clad material can be reduced. By further reducing the proportion of copper and relatively further increasing the proportion of aluminum in the clad material, it becomes easier to achieve a weight reduction of 50% or more of the clad material and reduction of a total manufacturing cost related to manufacturing of the clad material, compared to a pure copper material (equivalent to C1020). The proportion of aluminum in the clad material is preferably further increased. For example, a clad material satisfying $8 \leq T_A/T_{C1} \leq 26$ and $8 \leq T_A/T_{C2} \leq 26$ can be expected to achieve a weight reduction of 55% or more compared to a pure copper material (equivalent to C1020). If the total manufacturing cost of the clad material is reduced, it becomes possible to provide a more affordable clad material. Regarding the total manufacturing cost of the clad material, for example, based on a May 2023 average of three-month futures settlement prices at the London Metal Exchange, copper is trading at about 3.6 times the price of aluminum (virgin metal).

In the clad material 1 satisfying $6 \leq T_A/T_{C1} \leq 26$, since $T_A > 0$ and $T_{C1} > 0$, $6 \cdot T_{C1} \leq T_A \leq 26 \cdot T_{C1}$ holds true. Thus, in the clad material 1 satisfying $6 \leq T_A/T_{C1} \leq 26$, the average layer thickness $T_A$ of the aluminum layer 13 is 6 times or more and 26 times or less the average layer thickness $T_{C1}$ of the copper layer 11. Similarly, in the clad material 1 satisfying $6 \leq T_A/T_{C2} \leq 26$, since $T_A > 0$ and $T_{C2} > 0$, $6 \cdot T_{C2} \leq T_A \leq 26 \cdot T_{C2}$ holds true. Thus, in the clad material 1 satisfying $6 \leq T_A/T_{C2} \leq 26$, the average layer thickness $T_A$ of the aluminum layer 13 is 6 times or more and 26 times or less the average layer thickness $T_{C2}$ of the copper layer 12. Accordingly, in the case of $T_{C1} = T_{C2}$ (> 0), for example, if $T_{C1} = 1$, then a thickness ratio (hereinafter expressed in a form of $T_{C1}:T_A:T_{C2}$) of the main layers constituting the clad material 1 is $T_{C1}:T_A:T_{C2}$ = 1:6:1 to 1:26:1. In addition, in the case of $T_{C1} \neq T_{C2}$ (> 0), for example, if $T_{C1} = 1$ and $T_{C2} = m \cdot T_{C1}$ (m > 0), then $T_{C1}:T_A:T_{C2}$ = 1:6:m to 1:26:m. $T_A/T_{C1}$ and $T_A/T_{C2}$ are values rounded to the nearest whole number at the first decimal place.

In the clad material 1, in the case where 0.5 mm $\leq T_P \leq$ 2.0 mm is satisfied, and $6 \leq T_A/T_{C1} \leq 26$ and $6 \leq T_A/T_{C2} \leq 26$ are satisfied, a sum ($T_{C1} + T_A + T_{C2}$) of the average layer thicknesses of each layer may be thought to be equal to the average total thickness $T_P$. In other words, in the clad material 1, $T_P = T_{C1} + T_A + T_{C2}$ may be thought to hold true. According to this relationship of $T_P = T_{C1} + T_A + T_{C2}$, in the case of $T_{C1} = T_{C2}$ (> 0), since $T_{C1}:T_A:T_{C2}$ = 1:6:1 to 1:26:1 as described above, $T_P$ is equal to or greater than $(1 + 6 + 1) \cdot T_{C1}$ and equal to or less than $(1 + 26 + 1) \cdot T_{C1}$, that is, equal to or greater than $8 \cdot T_{C1}$ and equal to or less than $28 \cdot T_{C1}$. In addition, in the case of $T_{C1} \neq T_{C2}$ (> 0), since $T_{C1}:T_A:T_{C2}$ = 1:6:m to 1:26:m ($T_{C2} = m \cdot T_{C1}$, m > 0) as described above, $T_P$ is equal to or greater than $(1 + 6 + m) \cdot T_{C1}$ and equal to or less than $(1 + 26 + m) \cdot T_{C1}$, that is, equal to or greater than $(7 + m) \cdot T_{C1}$ and equal to or less than $(27 + m) \cdot T_{C1}$.

As described above, since the average total thickness $T_P$ of the clad material 1 is 0.5 mm or more and 2.0 mm or less, in the case of $T_{C1} = T_{C2}$ (> 0), "$T_P$ is equal to or greater than $8 \cdot T_{C1}$ and equal to or less than $28 \cdot T_{C1}$" is equivalent to "$T_P$ is 0.5 mm or more and 2.0 mm or less". Thus, the average layer thickness $T_{C1}$ of the copper layer 11 is equal to or greater than $1/28 \times 0.5$ mm and equal to or less than $1/8 \times 2.0$ mm, that is, approximately 0.018 mm or more and 0.25 mm or less. Similarly, the average layer thickness $T_{C2}$ of the copper layer 12 is equal to or greater than $1/28 \times 0.5$ mm and equal to or less than $1/8 \times 2.0$ mm, that is, approximately 0.018 mm or more and 0.25 mm or less. In addition, in this case, since the average layer thickness $T_A$ of the aluminum layer 13 is obtained according to $T_P - (T_{C1} + T_{C2})$, the average layer thickness $T_A$ of the aluminum layer 13 is approximately 0.46 mm or more and 1.50 mm or less. On the other hand, in the case of $T_{C1} \neq T_{C2}$ ($T_{C2} = m \cdot T_{C1}$, m > 0), "$T_P$ is equal to or greater than $(7 + m) \cdot T_{C1}$ and equal to or less than $(27 + m) \cdot T_{C1}$" is equivalent to "$T_P$ is 0.5 mm or more and 2.0 mm or less". Thus, the average layer thickness $T_{C1}$ of the copper layer 11 is equal to or greater than $1/(27 + m) \times 0.5$ mm and equal to or less than $1/(7 + m) \times 2.0$ mm. Similarly, since the average layer thickness $T_{C2}$ of the copper layer 12 is $T_{C2} = m \cdot T_{C1}$, the average layer thickness $T_{C2}$ of the copper layer 12 is equal to or greater than $m/(27 + m) \times 0.5$ mm and equal to or less than $m/(7 + m) \times 2.0$ mm. "m = 1" means "$T_{C1} = T_{C2}$ (> 0)". A measurement method of the average layer thicknesses $T_A$, $T_{C1}$, and $T_{C2}$ of the clad material 1 will be described later.

$$(3)\ 1.0 \leq T_{C1MAX}/T_{C1MIN} \leq 3.0\ \text{and}\ 1.0 \leq T_{C2MAX}/T_{C2MIN} \leq 3.0$$

In the clad material 1 satisfying $1.0 \leq T_{C1MAX}/T_{C1MIN} \leq 3.0$, a variation (fluctuation) in a layer thickness value of the copper layer 11 measured at multiple spots along the rolling direction (X direction) of the clad material 1 is suppressed to be small. In other words, in a clad material 1 in which a value obtained by dividing the maximum layer thickness $T_{C1MAX}$ by the minimum layer thickness $T_{C1MIN}$ is 3.0 or less when measuring the maximum layer thickness $T_{C1MAX}$ and the minimum layer thickness $T_{C1MIN}$ of the copper layer 11 in the measurement target range of the average layer thickness $T_{C1}$ of the copper layer 11, the copper layer 11 is uniformly formed along the rolling direction (X direction) thereof. Preferably, the copper layer 11 is more uniformly formed, satisfying $1.0 \leq T_{C1MAX}/T_{C1MIN} \leq 2.5$. More preferably, the copper layer 11 is sufficiently uniformly formed, satisfying $1.0 \leq T_{C1MAX}/T_{C1MIN} \leq 2.0$.

In addition, in the clad material 1 satisfying $1.0 \leq T_{C2MAX}/T_{C2MIN} \leq 3.0$, a variation (fluctuation) in a layer thickness value of the copper layer 12 measured at multiple spots along the rolling direction (X direction) of the clad material 1 is suppressed to be small. In other words, in a clad material 1 in which a value obtained by dividing the maximum layer thickness $T_{C2MAX}$ by the minimum layer thickness $T_{C2MIN}$ is 3.0 or less when measuring the maximum layer thickness $T_{C2MAX}$ and the minimum layer thickness $T_{C2MIN}$ of the copper layer 12 in the measurement target range of the average layer thickness $T_{C2}$ of the copper layer 12, the copper layer 12 is uniformly formed along the rolling direction (X direction) thereof. Preferably, the copper layer 12 is more uniformly formed, satisfying $1.0 \leq T_{C2MAX}/T_{C2MIN} \leq 2.5$. More preferably, the copper layer 12 is sufficiently uniformly formed, satisfying $1.0 \leq T_{C2MAX}/T_{C2MIN} \leq 2.0$.

In the clad material 1 of the three-layer structure (copper layer 11/aluminum layer 13/copper layer 12), the variation in the layer thicknesses of the copper layers 11 and 12 on the outermost side is referred to as an undulation. In the measurement target range of the average layer thickness $T_{C1}$ of the copper layer 11, the value of $T_{C1MAX}/T_{C1MIN}$ obtained by dividing the maximum layer thickness $T_{C1MAX}$ by the minimum layer thickness $T_{C1MIN}$ is referred to as an undulation value of the copper layer 11. Since $T_{C1MAX} \geq T_{C1MIN}$, the undulation value of the copper layer 11 is 1.0 or more. Similarly, in the measurement target range of the average layer thickness $T_{C2}$ of the copper layer 12, the value of $T_{C2MAX}/T_{C2MIN}$ obtained by dividing the maximum layer thickness $T_{C2MAX}$ by the minimum layer thickness $T_{C2MIN}$ is referred to as an undulation value of the copper layer 12. Since $T_{C2MAX} \geq T_{C2MIN}$, the undulation value of the copper layer 12 is 1.0 or more. A measurement method of the maximum layer thicknesses $T_{C1MAX}$ and $T_{C2MAX}$ and the minimum layer thicknesses $T_{C1MIN}$ and $T_{C2MIN}$ of the copper layers 11 and 12 of the clad material 1 will be described later.

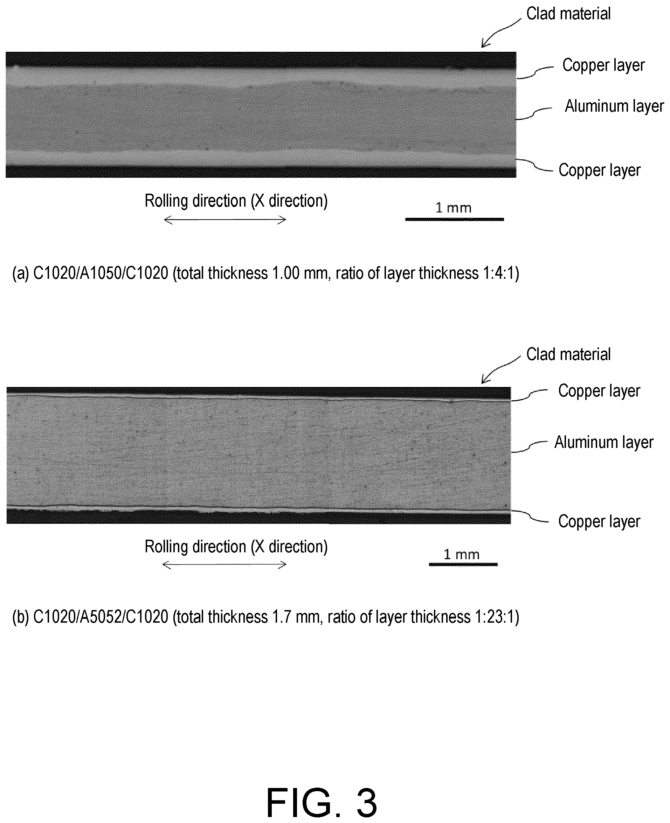

Herein, examples (cross-sectional photographs) of a form of the undulation occurring in the copper layers of the clad material are shown in FIG. 3. The cross-sectional photographs shown in FIG. 3 are obtained by photographing, at a same magnification, cross-sections cut along the rolling direction (X direction) of the clad material. In the clad material shown in FIG. 3(a), a layer structure of the three-layer structure (copper layer/aluminum layer/copper layer) is C1020/A1050/C1020 (refer to FIG. 2), the total thickness $T_P$ is 1.0 mm, and a ratio of the layer thicknesses $T_{C1}$, $T_A$, and $T_{C2}$ is 1:4:1. In the vicinity of a center of this cross-sectional photograph, the undulation of the copper layers can be clearly visually recognized. In addition, in the clad material shown in FIG. 3(b), the layer structure of the three-layer structure (copper layer/aluminum layer/copper layer) is C1020/A5052/C1020 (refer to FIG. 2), the total thickness $T_P$ is 1.7 mm, and the ratio of the layer thicknesses $T_{C1}$, $T_A$, and $T_{C2}$ is 1:23:1. In this cross-sectional photograph, the undulation of the copper layers cannot be clearly visually recognized.

As described above, in the clad material 1, since the undulation of the copper layers 11 and 12 is suppressed to be small enough to satisfy $1.0 \leq T_{C1MAX}/T_{C1MIN} \leq 3.0$ and $1.0 \leq T_{C2MAX}/T_{C2MIN} \leq 3.0$, when manufacturing the clad material, a part of the aluminum layer 13 is less likely to be exposed from the surface of the clad material 1. In addition, as described above, in the clad material 1, since $T_{C1}:T_A:T_{C2}$ is 1:6:m to 1:26:m (m > 0), and is 1:6:1 to 1:26:1 (m = 1), regarding the thickness ratio (X) of the aluminum layer described in the section of the problem to be solved by the invention, $6 \leq X \leq 26$ holds true, satisfying $X \geq 5$. Thus, in the clad material 1, the ratio of the average layer thickness $T_A$ of the aluminum layer 13 can be sufficiently increased with respect to the average layer thicknesses $T_{C1}$ and $T_{C2}$ of the copper layers 11 and 12.

Accordingly, even with an aluminum layer 13 made of A1050, which is likely to be exposed from the surface of the clad material 1, by sufficiently increasing the ratio of the average layer thickness $T_A$ thereof, exposure on the surface of the clad material 1 can be sufficiently suppressed. Also, by replacing the conventional pure copper material made of C1020 with the clad material 1 satisfying (1), (2), and (3) above obtained by sequentially laminating and pressure-bonding, for example, a copper layer made of C1020, an aluminum layer made of A1050, and a copper layer made of C1020, a weight reduction of 50% or more can be achieved compared to the pure copper material. From the perspective of weight reduction of the clad material 1, $T_{C1}:T_A:T_{C2}$ of the clad material 1 is preferably close to 1:26:1, and a range of $T_A$ is preferably shifted with respect to $T_{C1}$ and $T_{C2}$, for example, changing 1:6:1 to 1:7:1, 1:8:1, or 1:9:1, to increase the ratio of the aluminum layer to the copper layers.

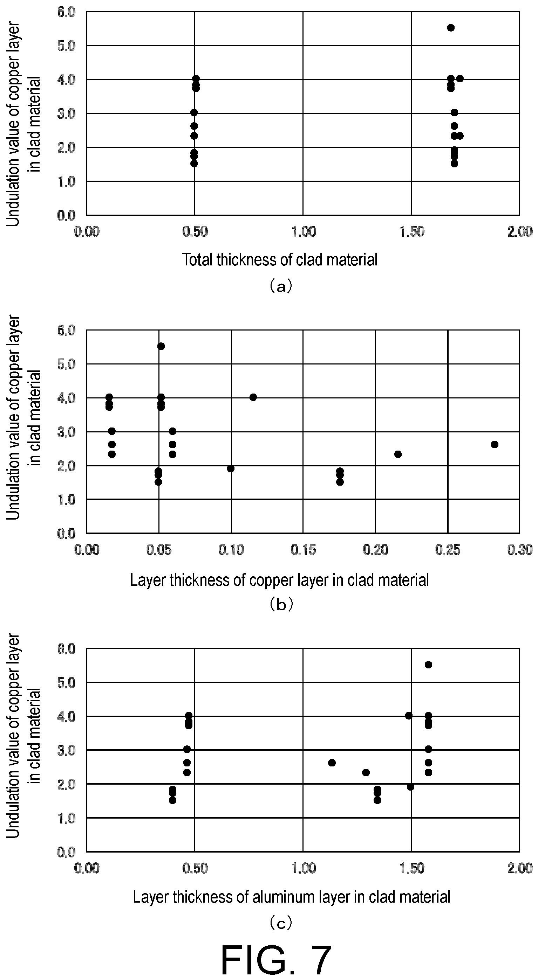

The material of the aluminum layer 13 constituting the clad material 1 is not limited to A1050 (1000 series aluminum of JIS standard) described above. The material of the aluminum layer 13 constituting the clad material 1 may be, for example, an A3000 series aluminum alloy (e.g., A3003) of JIS standard containing Mn, an A5000 series aluminum alloy (e.g., A5052) of JIS standard containing Mg, or an A6000 series aluminum alloy (e.g., A6063) of JIS standard containing Mg and Si. In addition, to suppress the undulation of the copper layers 11 and 12 constituting the clad material 1, a deformation resistance of the aluminum layer 13 is preferably increased to be close to a deformation resistance of the copper layers 11 and 12. Referring to Non-Patent Literature 1 (FIG. 7, in the case of 0.4 strain), for example, compared to

# EP 4 566 732 A1

A1050, a room temperature deformation resistance of an aluminum alloy is about 1.7 times in the case of A3003, about 2.24 times in the case of A6063, and about 2.46 times in the case of A5052. Accordingly, it is thought that the material of the aluminum layer 13 is preferably A3000 series such as A3003, more preferably A6000 series such as A6063, and even more preferably A5000 series such as A5052.

Herein, a case of using a clad material of a three-layer structure (copper layer/aluminum layer/copper layer) as a conductor used in a current device for alternating current, such as a portable charger or a wireless power supply, is considered. In the case of alternating current, depending on the frequency used, a skin effect of the conductor may become an issue. Since a skin depth of the conductor depends on the material (conductivity, permeability) of the conductor and the frequency of the alternating current, the skin depth of the conductor does not change by a simple increase in a cross-sectional area of the conductor. Also, copper, which has higher conductivity and lower electrical resistance than aluminum, allows current to flow more easily. Thus, it is thought that an effective cross-sectional area of the clad material through which alternating current flows does not change by a simple increase in the total thickness of the clad material, but depends on cross-sectional areas of the copper layers constituting the front and back of the clad material. From this perspective, it is thought that, as the undulation value of the copper layers constituting the clad material becomes smaller, an apparent cross-sectional area of a central portion in the thickness direction (Z direction) of the copper layers increases and the effective cross-sectional area of the copper layers is ensured, so the electrical resistance of the clad material can be suppressed to be small.

For example, in the case of a conductor made of pure copper (equivalent to C1020) under an environment of about 20°C, the skin depth of the conductor used for alternating current is about 9.3 mm at 50 Hz, about 8.5 mm at 60 Hz, about 2.1 mm at 1 kHz, about 0.66 mm at 10 kHz, about 0.30 mm at 50 kHz, about 0.25 mm at 70 kHz, about 0.21 mm at 100 kHz, about 0.20 mm at 110 kHz, about 0.18 mm at 130 kHz, about 0.09 mm at 500 kHz, about 0.079 mm at 700 kHz, about 0.07 mm at 1 MHz, about 0.02 mm at 10 MHz, about 0.018 mm at 13 MHz, and about 0.006 mm at 120 MHz.

For example, in a clad material 1 with $T_P$ being 0.5 mm having copper layers 11 and 12 made of pure copper (C1020) with $T_{C1}$ and $T_{C2}$ being 0.018 mm, $T_{C1}:T_A:T_{C2}$ is approximately 1:26:1. In the case of using this clad material 1 as a conductor for alternating current, if there is no undulation (undulation value = 1.0) in the copper layers 11 and 12, it is thought that an influence of the aluminum layer 13, which has higher electrical resistance (conductivity) than the copper layers 11 and 12, is less likely to occur, and a use at a frequency equal to or higher than a frequency (about 13 MHz) at which the skin depth becomes 0.018 mm or less is preferable. In addition, even if there is undulation in the copper layers 11 and 12, as long as the undulation value does not exceed 3.0, the minimum layer thicknesses $T_{C1MIN}$ and $T_{C2MIN}$ of the copper layers 11 and 12 are 1/3 (about 0.006 mm) or more of the average layer thicknesses $T_{C1}$ and $T_{C2}$, so it is thought that a use at a frequency equal to or higher than a frequency (about 120 MHz) at which the skin depth becomes 0.006 mm or less is preferable. Similarly, if the undulation value of the copper layers 11 and 12 is, for example, 2.5, it is thought that a use at a frequency equal to or higher than a frequency (about 85 MHz) at which the skin depth becomes 0.007 mm or less is preferable, and if the undulation value of the copper layers 11 and 12 is, for example, 2.0, it is thought that a use at a frequency equal to or higher than a frequency (about 55 MHz) at which the skin depth becomes 0.009 mm or less is preferable.

For example, in a clad material 1 with $T_P$ being 2.0 mm having copper layers 11 and 12 made of pure copper (C1020) with $T_{C1}$ and $T_{C2}$ being 0.25 mm, $T_{C1}:T_A:T_{C2}$ is approximately 1:6:1. In the case of using this clad material 1 as a conductor for alternating current, if there is no undulation (undulation value = 1.0) in the copper layers 11 and 12, an influence of the aluminum layer 13 which has higher electrical resistance (conductivity) than the copper layers 11 and 12 is less likely to occur, and it is thought that a use at 70 kHz or higher at which the skin depth becomes 0.25 mm or less is preferable. In addition, even if there is undulation in the copper layers 11 and 12, as long as the undulation value does not exceed 3.0, the minimum layer thicknesses $T_{C1MIN}$ and $T_{C2MIN}$ of the copper layers 11 and 12 is 1/3 (about 0.083 mm) or more of the average layer thicknesses $T_{C1}$ and $T_{C2}$, so it is thought that a use at a frequency equal to or higher than a frequency (about 700 kHz) at which the skin depth becomes 0.079 mm or less is preferable. Similarly, if the undulation value of the copper layers 11 and 12 is, for example, 2.5, a use at a frequency equal to or higher than a frequency (about 440 kHz) at which the skin depth becomes 0.10 mm or less is preferable, and if the undulation value of the copper layers 11 and 12 is, for example, 2.0, it is thought that a use at a frequency equal to or higher than a frequency (about 280 kHz) at which the skin depth becomes 0.125 mm or less is preferable.

As described above, in the case of using the clad material 1 as a conductor for alternating current considering the skin depth, it is thought that there is a range of frequency suitable for use corresponding to the undulation value of the copper layers 11 and 12 of the clad material. As will be described later, in the clad material 1 satisfying (1), (2), and (3) above, an AC volume resistivity is 20 mΩ•mm or less when the frequency of the alternating current is 10 kHz, and an AC volume resistivity is 200 mΩ•mm or less when the frequency of the alternating current is 100 kHz. From this perspective, the clad material 1 satisfying (1), (2), and (3) above can sufficiently function as a conductor for alternating current with a frequency of 10 kHz or higher and 100 kHz or lower.

Considering the use as a conductor regardless of whether the current is direct current or alternating current, the copper layers 11 and 12 constituting the clad material 1 are preferably made of pure copper such as C1020 or C1100 of JIS standard, which has low electrical resistance and excellent conductivity. Conventionally, the pure copper material widely used as a conductor regardless of whether the current is direct current or alternating current is made of C1020 or C1100, and a conductivity thereof is about 100% IACS.

It is thought that the aluminum layer 13 constituting the clad material 1 is preferably made of pure aluminum such as A1050 or A1100 of JIS standard, which has lower electrical resistance. However, when manufacturing a clad material with an excessively large thickness ratio of the aluminum layer to the copper layers using copper plates made of C1020 and an aluminum plate made of A1050 according to a conventional manufacturing method of a clad material, the undulation value of the copper layers may exceed 3.0 and fail to satisfy (3) above. This is because even if the copper plates made of C1020 are tempered to be sufficiently softened and the aluminum plate made of A1050 is tempered to be hardened as much as possible when laminating and pressure-bonding the copper plates made of C1020 and the aluminum plate made of A1050, a difference in deformation resistance that occurs between the copper plates and the aluminum plate still becomes excessively large when the copper plates and the aluminum plate are laminated and pressure-bonded to each other.

Thus, the aluminum layer 13 constituting the clad material 1 is preferably made of an aluminum alloy which has relatively low electrical resistance and is capable of being tempered to be appropriately hardened. From this perspective, the aluminum alloy to be combined with pure copper such as C1020, which has high conductivity and is advantageous, is preferably an A3000 series aluminum alloy of JIS standard containing Mn such as A3003, an A5000 series aluminum alloy of JIS standard containing Mg such as A5052, or an A6000 series aluminum alloy of JIS standard containing Mg and Si such as A6063. By using an aluminum alloy such as A3003, A5052, or A6063 described above, the difference in deformation resistance can be suppressed to be small during lamination and pressure-bonding with pure copper. The conductivity is, for example, about 101% IACS in the case of C1020, about 60% IACS in the case of A1050, about 40% IACS (H18 temper) to about 50% IACS (O temper) in the case of A3003, about 35% IACS (average of all tempers) in the case of A5052, and about 53% IACS (T6 temper) to about 58% IACS (O temper) in the case of A6063. In addition, the specific gravity is, for example, about 8.94 in the case of C1020, about 2.70 in the case of A1050, about 2.73 in the case of A3003, about 2.68 in the case of A5052, and about 2.61 in the case of A6063.

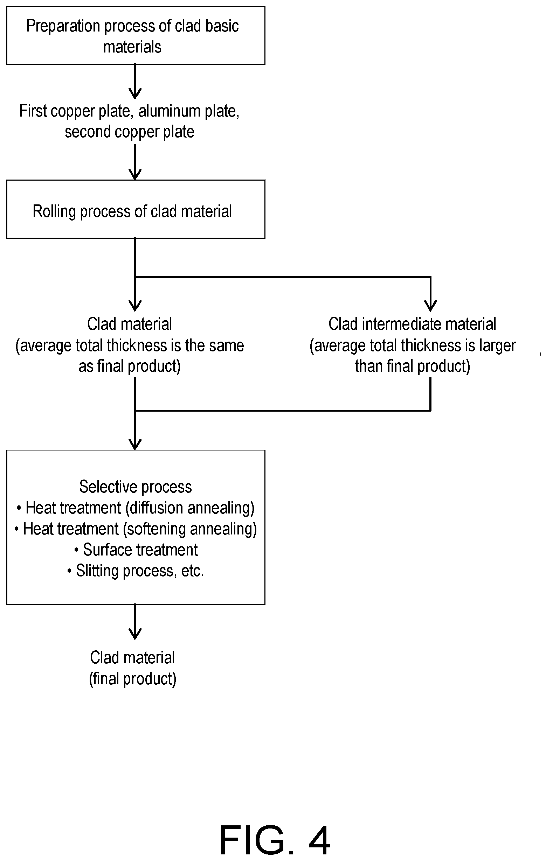

To manufacture the clad material 1 shown in FIG. 1 and FIG. 2 described above in a stable and easy manner, several improvements need to be made to the conventional manufacturing method of the clad material. Specifically, as shown in FIG. 4, the manufacturing method of the clad material according to the present invention includes

(A) a preparation process of clad basic materials, and
(B) a rolling process of a clad material, and

makes several improvements in each of processes of (A) and (B) above.

(A) Preparation process of clad basic materials

In the case of manufacturing the clad material 1 shown in FIG. 1 and FIG. 2, in the preparation process of clad basic materials, a first copper plate, an aluminum plate, and a second copper plate that satisfy $6 \leq T_{AS}/T_{CS1} \leq 26$ and $6 \leq T_{AS}/T_{CS2} \leq 26$ and satisfy $B_{AS}/B_{CS1} \geq 1.0$ and $B_{AS}/B_{CS2} \geq 1.0$ are prepared. $T_{AS}/T_{CS1}$ and $T_{AS}/T_{CS2}$ are values rounded to the nearest whole number at the first decimal place. The first copper plate corresponds to the copper layer 11 (first copper layer) constituting the clad material 1. The aluminum plate corresponds to the aluminum layer 13 constituting the clad material 1. The second copper plate corresponds to the copper layer 12 (second copper layer) constituting the clad material 1. $T_{CS1}$ is an average plate thickness of the first copper plate, and a Vickers hardness thereof is $B_{CS1}$. $T_{AS}$ is an average plate thickness of the aluminum plate, and a Vickers hardness thereof is $B_{AS}$. $T_{CS2}$ is an average plate thickness of the second copper plate, and a Vickers hardness thereof is $B_{CS2}$. $B_{CS1}$, $B_{AS}$, and $B_{CS2}$ may be obtained according to a hardness measurement method in compliance with JIS standard using the clad basic materials (first copper plate, aluminum plate, and second copper plate).

By preparing the first copper plate, the aluminum plate, and the second copper plate having plate thicknesses that satisfy $6 \leq T_{AS}/T_{CS1} \leq 26$ and $6 \leq T_{AS}/T_{CS2} \leq 26$, it becomes easy to configure a clad material 1 that satisfies (2) above, namely, satisfying $6 \leq T_A/T_{C1} \leq 26$ and $6 \leq T_A/T_{C2} \leq 26$, upon performing rolling under appropriate conditions in the rolling process of the clad material. This is because when the first copper plate, the aluminum plate, and the second copper plate are rolled in a laminated state, all of the plates are rolled at a substantially same rolling ratio, and a thickness ratio of the three plates before and after rolling thus substantially does not change. From the perspective of weight reduction of the clad material 1, a range of a ratio of the plate thickness of the aluminum plate to the copper plates is preferably shifted to prepare a first copper plate, an aluminum plate, and a second copper plate having plate thicknesses that satisfy $8 \leq T_{AS}/T_{CS1} \leq 26$ and $8 \leq T_{AS}/T_{CS2} \leq 26$, and rolling is performed under appropriate conditions in the rolling process of the clad material to configure a clad material 1 that satisfies $8 \leq T_A/T_{C1} \leq 26$ and $8 \leq T_A/T_{C2} \leq 26$. The plate thicknesses of the first copper plate, the aluminum plate, and the second copper plate prepared in the preparation process of the clad basic materials maybe selected as needed, considering obtaining the clad material 1 with the average total thickness $T_P$ by the rolling process of the clad material to be described later.

In addition, by preparing the first copper plate, the aluminum plate, and the second copper plate tempered to hardnesses that satisfy $B_{AS}/B_{CS1} \geq 1.0$ and $B_{AS}/B_{CS2} \geq 1.0$, it becomes easy to configure a clad material 1 that satisfies (3) above, namely, satisfying $1.0 \leq T_{C1MAX}/T_{C1MIN} \leq 3.0$ and $1.0 \leq T_{C2MAX}/T_{C2MIN} \leq 3.0$, upon performing rolling under appropriate conditions in the rolling process of the clad material. The copper plates and the aluminum plate are work-hardened during rolling, and the Vickers hardness changes. A degree of increase in the Vickers hardness due to work hardening is greater in the case of the copper plates than in the case of the aluminum plate. Considering this increase in the Vickers hardness during rolling, the hardnesses of the copper plates and the aluminum plate are desirably equal, namely, satisfying $B_{AS}/B_{CS1} = 1.0$ and $B_{AS}/B_{CS2} = 1.0$. However, considering mass productivity, the hardnesses preferably satisfy $1.0 \leq B_{AS}/B_{CS2} \leq 2.0$ and $1.0 \leq B_{AS}/B_{CS2} \leq 2.0$, and more preferably satisfy $1.0 \leq B_{AS}/B_{CS2} \leq 1.8$ and $1.0 \leq B_{AS}/B_{CS2} \leq 1.8$.

(B) Rolling process of clad material

In the rolling process of the clad material, in a sequentially laminated state, the first copper plate, the aluminum plate, and the second copper plate, which are prepared in the preparation process of the clad basic material and satisfy $B_{AS}/B_{CS1} \geq 1.0$ and $B_{AS}/B_{CS2} \geq 1.0$, preferably satisfy $1.0 \leq B_{AS}/B_{CS2} \leq 2.0$ and $1.0 \leq B_{AS}/B_{CS2} \leq 2.0$, and more preferably satisfy $1.0 \leq B_{AS}/B_{CS2} \leq 1.8$ and $1.0 \leq B_{AS}/B_{CS2} \leq 1.8$, are subjected to rolling to satisfy $B_A/B_{C1} \geq 0.5$ and $B_A/B_{C2} \geq 0.5$ to form a clad material in which a copper layer (first copper layer), an aluminum layer, and a copper layer (second copper layer) are sequentially laminated and pressure-bonded.

This rolling process of the clad material includes a process until obtaining the clad material 1 from the clad basic materials. The process of laminating and pressure-bonding the clad basic materials to obtain the form of the clad material is referred to as clad rolling. In clad rolling, by selecting a rolling ratio (degree of working), it is possible to roll to the same thickness as the clad material 1, and it is also possible to roll in a manner not reaching the same thickness as the clad material 1. After clad rolling, the clad material that has not reached the thickness of the clad material 1 is taken as a clad intermediate material (refer to FIG. 4) and is distinguished from the clad material 1. In the case of forming the clad intermediate material by clad rolling, a process of rolling the clad intermediate material to the thickness of the clad material 1 becomes necessary. Thus, the rolling process of the clad material includes intermediate rolling and finish rolling performed on the clad intermediate material. The intermediate rolling is intended for rolling to bring the thickness of the clad intermediate material closer to the thickness of the clad material 1, or to configure the thickness of the clad intermediate material to the same thickness as the clad material 1. In addition, the finish rolling is intended for rolling to configure the thickness of the clad intermediate material to the same thickness as the clad material 1. A clad material with the same thickness as the clad material 1 may be obtained by clad rolling, by a combination of clad rolling and finish rolling, or by a combination of clad rolling, intermediate rolling, and finish rolling.

The rolling ratio (degree of working) in clad rolling is preferably selected in a range of 40% or more and 80% or less. If the rolling ratio of clad rolling is too small, there is a tendency that a bonding strength between each layer constituting the clad material becomes insufficient, and the copper layers may peel off. If the rolling ratio of clad rolling is too large, there is a tendency that the undulation of the copper layers constituting the clad material increases, and the undulation value of the copper layers may increase. In addition, in the case of performing intermediate rolling or finish rolling, the rolling ratio thereof is preferably selected considering the undulation values of the copper layers, since the undulation of the copper layers tends to slightly increase as a total rolling ratio accumulated from clad rolling (total rolling ratio) increases.

By devising the ratios ($B_{AS}/B_{CS1}$ and $B_{AS}/B_{CS2}$) of the hardnesses of the clad basic materials as described above, and further devising the ratios ($B_A/B_{C1}$ and $B_A/B_{C2}$) of the hardness of the clad material formed by clad rolling which laminates and pressure-bonds the clad basic materials as described above, it becomes easy to configure a clad material 1 that satisfies (3) above, namely, satisfying $1.0 \leq T_{C1MAX}/T_{C1MIN} \leq 3.0$ and $1.0 \leq T_{C2MAX}/T_{C2MIN} \leq 3.0$. The closer $B_{AS}/B_{CS1}$ and $B_{AS}/B_{CS2}$ of the clad basic materials are to 1.0, the easier it becomes to bring $T_{C1MAX}/T_{C1MIN}$ and $T_{C2MAX}/T_{C2MIN}$ of the clad material 1 closer to 1.0.

$B_{C1}$, $B_A$, and $B_{C2}$ may be obtained according to a hardness measurement method in compliance with JIS standard using the clad material after clad rolling. $B_{C1}$ is the Vickers hardness of the copper layer (first copper layer) corresponding to the first copper plate in the clad material obtained by clad rolling. Similarly, $B_A$ is the Vickers hardness of the aluminum layer corresponding to the aluminum plate. Similarly, $B_{C2}$ is the Vickers hardness of the copper layer (second copper layer) corresponding to the second copper plate.

Accordingly, it is possible to obtain a clad material with the same thickness as the clad material 1, or a clad intermediate material thicker than the clad material 1. The clad material after clad rolling is preferably subjected to a heat treatment (diffusion annealing) for forming diffusion layers of an appropriate thickness to enhance the bonding strength between each layer constituting the clad material. Regarding the diffusion layers, reference is made to the diffusion layers 14a and 14b of the clad material 1. With respect to the clad material after clad rolling or after heat treatment (diffusion annealing), a heat treatment process such as softening annealing, a surface treatment process, a slitting process, etc. may be selectively performed as necessary.

According to the manufacturing method of the clad material shown in FIG. 4, which includes the preparation process of the clad basic materials and the rolling process of the clad material as described above, and includes selective processes as necessary, the clad material 1 shown in FIG. 1 and FIG. 2, namely, the clad material 1

$$(1) \text{ satisfying } 0.5 \text{ mm} \le T_P \le 2.0 \text{ mm,}$$

$$(2) \text{ satisfying } 6 \le T_A/T_{C1} \le 26 \text{ and } 6 \le T_A/T_{C2} \le 26,$$

and

$$(3) \text{ satisfying } 1.0 \le T_{C1MAX}/T_{C1MIN} \le 3.0 \text{ and } 1.0 \le T_{C2MAX}/T_{C2MIN} \le 3.0$$

can be configured.

At this time, the clad material 1 is preferably configured to shift the range of the ratio of the layer thickness of the aluminum layer to the copper layers, for example, to satisfy $8 \le T_A/T_{C1} \le 26$ and $8 \le T_A/T_{C2} \le 26$. In addition, the clad material 1 is preferably configured to satisfy $1.0 \le T_{C1MAX}/T_{C1MIN} \le 2.5$ and $1.0 \le T_{C2MAX}/T_{C2MIN} \le 2.5$, and more preferably satisfy $1.0 \le T_{C1MAX}/T_{C1MIN} \le 2.0$ and $1.0 \le T_{C2MAX}/T_{C2MIN} \le 2.0$. In the clad material 1, $T_{C1MAX}/T_{C1MIN}$ and $T_{C2MAX}/T_{C2MIN}$ desirably become 1.0.

Examples

Regarding the clad material and the manufacturing method of the clad material of the present invention, using the manufacturing method of the clad material shown in FIG. 4, clad materials (refer to FIG. 1 and FIG. 2) of a three-layer structure (copper layer/aluminum layer/copper layer) of an overlay type, which are representative configuration examples of the clad material, were trial-produced and evaluated. Table 1 shows clad basic materials (Basic Material No. 1 to Basic Material No. 23) prepared in the preparation process of the clad basic materials. Table 2 shows clad materials (Sample No. 1 to Sample No. 23) formed in the rolling process of the clad material. Among Trial Production 1 to Trial Production 23 shown in Table 2, Trial Production 1 to Trial Production 13, and Trial Production 23 are present invention examples.

[Table 1]

| Basic Material No. | Copper plate (first copper plate, second copper plate) | | | Aluminum plate | | | $T_{AS}/T_{CS1}$ $T_{AS}/T_{CS2}$ | $B_{AS}/B_{CS1}$ $B_{AS}/B_{CS2}$ | $T_{CS1} + T_{AS} + T_{CS2}$ [mm] |
| | Material | Plate thickness $T_{CS1}$, $T_{CS2}$ [mm] | Hardness $B_{CS1}$, $B_{CS2}$ [HV] | Material | Plate thickness $T_{AS}$ [mm] | Hardness $B_{AS}$ [HV] | | | |
|---|---|---|---|---|---|---|---|---|---|
| 1 | C1020 | 0.440 | 60 | A5052 | 3.370 | 60 | 8 | 1.0 | 4.250 |
| 2 | C1020 | 0.150 | 60 | A5052 | 3.950 | 60 | 26 | 1.0 | 4.250 |
| 3 | C1020 | 0.440 | 60 | A5052 | 3.370 | 85 | 8 | 1.4 | 4.250 |
| 4 | C1020 | 0.150 | 60 | A5052 | 3.950 | 85 | 26 | 1.4 | 4.250 |
| 5 | C1020 | 0.440 | 60 | A5052 | 3.370 | 100 | 8 | 1.7 | 4.250 |
| 6 | C1020 | 0.150 | 60 | A5052 | 3.950 | 100 | 26 | 1.7 | 4.250 |
| 7 | C1020 | 0.125 | 60 | A5052 | 1.000 | 60 | 8 | 1.0 | 1.250 |
| 8 | C1020 | 0.044 | 60 | A5052 | 1.160 | 60 | 26 | 1.0 | 1.248 |
| 9 | C1020 | 0.125 | 60 | A5052 | 1.000 | 85 | 8 | 1.4 | 1.250 |
| 10 | C1020 | 0.044 | 60 | A5052 | 1.160 | 85 | 26 | 1.4 | 1.248 |
| 11 | C1020 | 0.125 | 60 | A5052 | 1.000 | 100 | 8 | 1.7 | 1.250 |
| 12 | C1020 | 0.044 | 60 | A5052 | 1.160 | 100 | 26 | 1.7 | 1.248 |
| 13 | C1020 | 0.540 | 60 | A1050 | 3.230 | 30 | 6 | 0.5 | 4.310 |

(continued)

| Basic Material No. | Copper plate (first copper plate, second copper plate) | | | Aluminum plate | | | $T_{AS}/T_{CS1}$ $T_{AS}/T_{CS2}$ | $B_{AS}/B_{CS1}$ $B_{AS}/B_{CS2}$ | $T_{CS1}$ + $T_{AS}$ + $T_{CS2}$ [mm] |
|---|---|---|---|---|---|---|---|---|---|
| | Material | Plate thickness $T_{CS1}$, $T_{CS2}$ [mm] | Hardness $B_{CS1}$, $B_{CS2}$ [HV] | Material | Plate thickness $T_{AS}$ [mm] | Hardness $B_{AS}$ [HV] | | | |
| 14 | C1020 | 0.290 | 60 | A1050 | 3.730 | 30 | 13 | 0.5 | 4.310 |
| 15 | C1020 | 0.130 | 60 | A5052 | 3.950 | 60 | 30 | 1.0 | 4.210 |
| 16 | C1020 | 0.130 | 60 | A5052 | 3.950 | 85 | 30 | 1.4 | 4.210 |
| 17 | C1020 | 0.130 | 60 | A5052 | 3.950 | 100 | 30 | 1.7 | 4.210 |
| 18 | C1020 | 0.040 | 60 | A5052 | 1.190 | 60 | 30 | 1.0 | 1.270 |
| 19 | C1020 | 0.040 | 60 | A5052 | 1.190 | 85 | 30 | 1.4 | 1.270 |
| 20 | C1020 | 0.040 | 60 | A5052 | 1.190 | 100 | 30 | 1.7 | 1.270 |
| 21 | C1020 | 0.130 | 60 | A6063 | 3.950 | 80 | 30 | 1.3 | 4.210 |
| 22 | C1020 | 0.708 | 60 | A1050 | 2.833 | 30 | 4 | 0.5 | 4.250 |
| 23 | C1020 | 0.250 | 60 | A5052 | 3.750 | 60 | 15 | 1.0 | 4.250 |

[Table 2]

| Sample No. | Clad material (sample) | | | Copper layer (first copper layer, second copper layer) | | Aluminum layer | | $T_A/T_{C1}$ $T_A/T_{C2}$ | $B_A/B_{C1}$ $B_A/B_{C2}$ | Weight reduction rate [%] | Undulation value $T_{C1MAX}/T_{C1MIN}$ $T_{C2MAX}/T_{C2MIN}$ | Surface exposure of aluminum layer |
|---|---|---|---|---|---|---|---|---|---|---|---|---|
| | Clad rolling ratio [%] | Layer structure | Total thickness $T_P$ [mm] | Layer thickness $T_{C1}$, $T_{C2}$ [mm] | Hardness $B_{C1}$, $B_{C2}$ [HV] | Layer thickness $T_A$ [mm] | Hardness $B_A$ [HV] | | | | | |
| 1 | 60 | C1020/A5052/C1020 | 1.70 | 0.18 | 120 | 1.35 | 110 | 8 | 0.9 | 56 | 1.8 | Absent |
| 2 | 60 | C1020/A5052/C1020 | 1.70 | 0.06 | 120 | 1.58 | 110 | 26 | 0.9 | 65 | 3.0 | Absent |
| 3 | 60 | C1020/A5052/C1020 | 1.70 | 0.18 | 120 | 1.35 | 110 | 8 | 0.9 | 56 | 1.7 | Absent |
| 4 | 60 | C1020/A5052/C1020 | 1.70 | 0.06 | 120 | 1.58 | 110 | 26 | 0.9 | 65 | 2.6 | Absent |
| 5 | 60 | C1020/A5052/C1020 | 1.70 | 0.18 | 120 | 1.35 | 110 | 8 | 0.9 | 56 | 1.5 | Absent |
| 6 | 60 | C1020/A5052/C1020 | 1.70 | 0.06 | 120 | 1.58 | 110 | 26 | 0.9 | 65 | 2.3 | Absent |
| 7 | 60 | C1020/A5052/C1020 | 0.50 | 0.05 | 120 | 0.40 | 110 | 8 | 0.9 | 56 | 1.8 | Absent |
| 8 | 60 | C1020/A5052/C1020 | 0.50 | 0.02 | 120 | 0.46 | 110 | 26 | 0.9 | 65 | 3.0 | Absent |
| 9 | 60 | C1020/A5052/C1020 | 0.50 | 0.05 | 120 | 0.40 | 110 | 8 | 0.9 | 56 | 1.7 | Absent |
| 10 | 60 | C1020/A5052/C1020 | 0.50 | 0.02 | 120 | 0.46 | 110 | 26 | 0.9 | 65 | 2.6 | Absent |
| 11 | 60 | C1020/A5052/C1020 | 0.50 | 0.05 | 120 | 0.40 | 110 | 8 | 0.9 | 56 | 1.5 | Absent |
| 12 | 60 | C1020/A5052/C1020 | 0.50 | 0.02 | 120 | 0.46 | 110 | 26 | 0.9 | 65 | 2.3 | Absent |
| 13 | 60 | C1020/A1050/C1020 | 1.72 | 0.22 | 120 | 1.29 | 50 | 6 | 0.4 | 52 | 2.3 | Absent |
| 14 | 60 | C1020/A1050/C1020 | 1.72 | 0.12 | 120 | 1.49 | 50 | 13 | 0.4 | 60 | 4.0 | Present |
| 15 | 60 | C1020/A5052/C1020 | 1.68 | 0.05 | 120 | 1.58 | 110 | 30 | 0.9 | 66 | 4.0 | Present |
| 16 | 60 | C1020/A5052/C1020 | 1.68 | 0.05 | 120 | 1.58 | 110 | 30 | 0.9 | 66 | 3.8 | Present |
| 17 | 60 | C1020/A5052/C1020 | 1.68 | 0.05 | 120 | 1.58 | 110 | 30 | 0.9 | 66 | 3.7 | Present |
| 18 | 60 | C1020/A5052/C1020 | 0.51 | 0.02 | 120 | 0.48 | 110 | 30 | 0.9 | 66 | 4.0 | Present |
| 19 | 60 | C1020/A5052/C1020 | 0.51 | 0.02 | 120 | 0.48 | 110 | 30 | 0.9 | 66 | 3.8 | Present |
| 20 | 60 | C1020/A5052/C1020 | 0.51 | 0.02 | 120 | 0.48 | 110 | 30 | 0.9 | 66 | 3.7 | Present |
| 21 | 60 | C1020/A6063/C1020 | 1.68 | 0.05 | 120 | 1.58 | 100 | 30 | 0.8 | 66 | 5.5 | Present |
| 22 | 60 | C1020/A1050/C1020 | 1.70 | 0.28 | 120 | 1.13 | 50 | 4 | 0.4 | 47 | 2.6 | Absent |

(continued)

| Sample No. | Clad material (sample) | | | Copper layer (first copper layer, second copper layer) | | Aluminum layer | | $T_A/T_{C1}$ $T_A/T_{C2}$ | $B_A/B_{C1}$ $B_A/B_{C2}$ | Weight reduction rate [%] | Undulation value $T_{C1MAX}/T_{C1MIN}$ $T_{C2MAX}/T_{C2MIN}$ | Surface exposure of aluminum layer |
|---|---|---|---|---|---|---|---|---|---|---|---|---|
| | Clad rolling ratio [%] | Layer structure | Total thickness $T_P$ [mm] | Layer thickness $T_{C1}$, $T_{C2}$ [mm] | Hardness $B_{C1}$, $B_{C2}$ [HV] | Layer thickness $T_A$ [mm] | Hardness $B_A$ [HV] | | | | | |
| 23 | 60 | C1020/A5052/C1020 | 1.70 | 0.10 | 120 | 1.50 | 110 | 15 | 0.9 | 62 | 1.9 | Absent |

Corresponding to each of Trial Production 1 to Trial Production 23, in the preparation process of the clad basic materials, clad basic materials (copper plates, aluminum plate) of Basic Material No. 1 to Basic Material No. 23 shown in Table 1 were prepared. In Table 1, the materials of the copper plates (first copper plate, second copper plate) and the aluminum plate are equivalent to JIS standard. In addition, the plate thicknesses $T_{CS1}$, $T_{CS2}$, and $T_{AS}$ of the copper plates (first copper plate, second copper plate) and the aluminum plate are measured values (average values) measured with a micrometer before clad rolling. In addition, the Vickers hardnesses $B_{CS1}$, $B_{CS2}$, and $B_{AS}$ of the copper plates (first copper plate, second copper plate) and the aluminum plate are measured values (average values) according to the Vickers hardness test in compliance with JIS-Z2244 before clad rolling. In addition, $T_{AS}/T_{CS1}$ and $T_{AS}/T_{CS2}$ are values obtained by dividing the plate thickness $T_{AS}$ of the aluminum plate by the plate thicknesses $T_{CS1}$ and $T_{CS2}$ of the copper plates (first copper plate, second copper plate) and rounding at the first decimal place. In addition, $B_{AS}/B_{CS1}$ and $B_{AS}/B_{CS1}$ are values obtained by dividing the Vickers hardness $B_{AS}$ of the aluminum plate by the Vickers hardnesses $B_{CS}$ and $B_{CS2}$ of the copper plates (first copper plate, second copper plate) and rounding at the second decimal place. In addition, $T_{CS1} + T_{AS} + T_{CS2}$ is the total thickness of the three plates when the two copper plates (first copper plate, second copper plate) and the one aluminum plate are laminated.

Corresponding to each of Trial Production 1 to Trial Production 23, in the rolling process of the clad material, using the clad basic materials (copper plates, aluminum plate) of Basic Material No. 1 to Basic Material No. 23 prepared, clad rolling was performed to achieve the clad rolling ratio shown in Table 2, to form clad materials of a three-layer structure (copper layer/aluminum layer/copper layer) of Sample No. 1 to Sample No. 23 shown in Table 2. In all trial productions, before clad rolling, a surface treatment by stainless steel brush polishing (buffing) is performed on one-side plate surfaces of the copper plates and both plate surfaces of the aluminum plate, which come into contact with each other when the three plates are laminated. In addition, in all trial productions, after clad rolling, a heat treatment (diffusion annealing) is performed under predetermined holding conditions (400°C, 3 minutes) in a furnace with a nitrogen gas atmosphere.

In Table 2, for example, C1020/A5052/C1020 shown as the layer structure in Sample No. 1 represents the clad material of the three-layer structure (copper layer/aluminum layer/copper layer). In addition, the total thickness $T_P$ of the clad material is a measured value (value obtained by rounding to the second decimal place of average value) measured with a micrometer after clad rolling. In addition, the layer thicknesses $T_{C1}$, $T_{C2}$, and $T_A$ of the copper layers (first copper layer, second copper layer) and the aluminum layer are measured values (values obtained by rounding to the second decimal place of average values) under a metallurgical microscope (200X magnification) of a sample processed and formed to allow observation of a 20 mm long cross-section along the rolling direction (X direction shown in FIG. 1) of the clad material. In addition, $T_A/T_{C1}$ and $T_A/T_{C2}$ are values obtained by dividing the layer thickness $T_A$ of the aluminum layer by the layer thicknesses $T_{C1}$ and $T_{C2}$ of the copper layers (first copper layer, second copper layer) and rounding at the first decimal place. The average layer thicknesses $T_{C1}$ and $T_{C2}$ obtained as described above of the two copper layers (first copper layer, second copper layer) constituting the clad material were substantially the same.

In Table 2, the Vickers hardnesses $B_{C1}$, $B_{C2}$, and $B_A$ of the copper layers (first copper layer, second copper layer) and the aluminum layer are the measured values (average values) according to the Vickers hardness test in compliance with JIS-Z2244 before clad rolling. $B_A/B_{C1}$ and $B_A/B_{C2}$ are values obtained by dividing the Vickers hardness $B_A$ of the aluminum layer by the Vickers hardnesses $B_{C1}$ and $B_{C2}$ of the copper layers (first copper layer, second copper layer) and rounding at the second decimal place. The hardnesses $B_{C1}$ and $B_{C2}$ obtained as described above of the two copper layers (first copper layer, second copper layer) constituting the front and back of the clad material were substantially the same.

In Table 2, the weight reduction rate is a calculated value obtained according to $(1 - W_{CLAD}/W_{C1020}) \times 100$. Herein, $W_{CLAD}$ is a calculated value obtained according to "layer thickness $T_{C1}$ of copper layer (first copper layer) $\times$ specific gravity of copper layer (first copper layer) + layer thickness $T_A$ of aluminum layer $\times$ specific gravity of aluminum layer + layer thickness $T_{C2}$ of copper layer (second copper layer) $\times$ specific gravity of copper layer (second copper layer)", and is defined as a weight index of the flat plate-shaped clad material. In addition, $W_{C1020}$ is a calculated value obtained according to "plate thickness of flat plate-shaped pure copper material $\times$ specific gravity (8.94) of pure copper material", and is defined as a weight index of pure copper material. The flat plate-shaped pure copper material has a material configured to be equivalent to JIS standard C1020, and a plate thickness thereof is configured to be the same value as the total thickness $T_P$ of the clad material serving as the evaluation target. The specific gravity of each material is configured to 8.94 in the case of a material equivalent to C1020, to 2.70 in the case of a material equivalent to A1050, to 2.69 in the case of a material equivalent to A5052, and to 2.68 in the case of a material equivalent to A6063.

In Table 2, the undulation value is a calculated value (rounded at the second decimal place) obtained by dividing the maximum layer thickness by the minimum layer thickness of the copper layer constituting the clad material. In addition, the undulation value ($T_{C1MAX}/T_{C1MIN}$, $T_{C2MAX}/T_{C2MIN}$) is described as the larger undulation value between the undulation value ($T_{C1MAX}/T_{C1MIN}$) of one copper layer (first copper layer) constituting the clad material and the undulation value ($T_{C2MAX}/T_{C2MIN}$) of the other copper layer (second copper layer). In addition, the maximum layer thicknesses $T_{C1MAX}$ and $T_{C2MAX}$ and the minimum layer thicknesses $T_{C1MIN}$ and $T_{C2MIN}$ of the two copper layers (first copper layer, second copper layer) are measured values specified under a metallurgical microscope (200X magnification) in a range of a 20 mm long cross-section along the rolling direction of the clad material, with which the average layer thicknesses $T_{C1}$ and $T_{C2}$ of the two copper layers (first copper layer, second copper layer) described above are obtained.

In Table 2, presence/absence of surface exposure of the aluminum layer is determined by visually observing the surface of the copper layers constituting the front and back of the flat plate-shaped clad material. In the case where exposure of an aluminum portion was confirmed on the surface of the copper layer, it is indicated as "Present", and in the case where exposure was not confirmed, it is indicated as "Absent".

In Trial Production 1 (present invention example), clad basic materials of Basic Material No. 1 were prepared, a clad material of Sample No. 1 was formed, and a weight reduction rate, an undulation value, and presence/absence of surface exposure of the aluminum layer were evaluated. The clad basic materials were tempered such that ratios $(B_{AS}/B_{CS1}, B_{AS}/B_{CS2})$ of Vickers hardness between the copper plates (first copper plate, second copper plate) and the aluminum plate became 1.0, and the plate thicknesses of the copper plates (first copper plate, second copper plate) and the aluminum plate were selected such that ratios $(T_A/T_{C1}, T_A/T_{C2})$ of layer thickness between the copper layers (first copper layer, second copper layer) and the aluminum layer of the clad material became 8. In this clad material, the total thickness was 1.70 mm, the average layer thickness of the copper layers (first copper layer, second copper layer) was 0.18 mm, the average layer thickness of the aluminum layer was 1.35 mm, and the weight reduction rate compared to pure copper material (C1020) was 56%. In this clad material, the undulation value of the copper layers was 1.8, and no surface exposure of the aluminum layer was confirmed. Since the undulation value of the copper layers (first copper layer, second copper layer) of this clad material is suppressed to a more preferable range of 2.0 or less, it is thought that an effective cross-sectional area for alternating current to flow is ensured. As a result, it was confirmed that the clad material of Sample No. 1 can be provided as a clad material that achieves a weight reduction of 50% or more compared to pure copper material (C1020) while suppressing electrical resistance to be small. Hereinafter, for simplicity, the copper plates (first copper plate, second copper plate) will be simply referred to as copper plates, and the copper layers (first copper layer, second copper layer) will be simply referred to as copper layers.

In Trial Production 2 (present invention example), clad basic materials of Basic Material No. 2 were prepared, a clad material of Sample No. 2 was formed, and was evaluated in the same manner as Trial Production 1. The clad basic materials were tempered such that ratios $(B_{AS}/B_{CS1}, B_{AS}/B_{CS2})$ of Vickers hardness between the copper plates and the aluminum plate became 1.0, and the plate thicknesses of the copper plates and the aluminum plate were selected such that ratios $(T_A/T_{C1}, T_A/T_{C2})$ of layer thickness between the copper layers and the aluminum layer of the clad material became 26. In this clad material, the total thickness was 1.70 mm, the average layer thickness of the copper layers was 0.06 mm, the average layer thickness of the aluminum layer was 1.58 mm, and the weight reduction rate compared to pure copper material (C1020) was 65%. In this clad material, the undulation value of the copper layers was 3.0, and no surface exposure of the aluminum layer was confirmed. Since the undulation value of the copper layers of this clad material is suppressed to a range of 3.0 or less, it is thought that an effective cross-sectional area for alternating current to flow is ensured. As a result, it was confirmed that the clad material of Sample No. 2 can be provided as a clad material that achieves a weight reduction of 50% or more compared to pure copper material (C1020) while suppressing electrical resistance to be small.

In Trial Production 3 (present invention example), clad basic materials of Basic Material No. 3 were prepared, a clad material of Sample No. 3 was formed, and was evaluated in the same manner as Trial Production 1. The clad basic materials were tempered such that ratios $(B_{AS}/B_{CS1}, B_{AS}/B_{CS2})$ of Vickers hardness between the copper plates and the aluminum plate became 1.4, and the plate thicknesses of the copper plates and the aluminum plate were selected such that ratios $(T_A/T_{C1}, T_A/T_{C2})$ of layer thickness between the copper layers and the aluminum layer of the clad material became 8. In this clad material, the total thickness was 1.70 mm, the average layer thickness of the copper layers was 0.18 mm, the average layer thickness of the aluminum layer was 1.35 mm, and the weight reduction rate compared to pure copper material (C1020) was 56%. In this clad material, the undulation value of the copper layers was 1.7, and no surface exposure of the aluminum layer was confirmed. Since the undulation value of the copper layers of this clad material is suppressed to the more preferable range of 2.0 or less, it is thought that an effective cross-sectional area for alternating current to flow is ensured. As a result, it was confirmed that the clad material of Sample No. 3 can be provided as a clad material that achieves a weight reduction of 50% or more compared to pure copper material (C1020) while suppressing electrical resistance to be small.

In Trial Production 4 (present invention example), clad basic materials of Basic Material No. 4 were prepared, a clad material of Sample No. 4 was formed, and was evaluated in the same manner as Trial Production 1. The clad basic materials were tempered such that ratios $(B_{AS}/B_{CS1}, B_{AS}/B_{CS2})$ of Vickers hardness between the copper plates and the aluminum plate became 1.4, and the plate thicknesses of the copper plates and the aluminum plate were selected such that ratios $(T_A/T_{C1}, T_A/T_{C2})$ of layer thickness between the copper layers and the aluminum layer of the clad material became 26. In this clad material, the total thickness was 1.70 mm, the average layer thickness of the copper layers was 0.06 mm, the average layer thickness of the aluminum layer was 1.58 mm, and the weight reduction rate compared to pure copper material (C1020) was 65%. In this clad material, the undulation value of the copper layers was 2.6, and no surface exposure of the aluminum layer was confirmed. Since the undulation value of the copper layers of this clad material is suppressed to the more preferable range of 2.0 or less, it is thought that an effective cross-sectional area for alternating current to flow is ensured. As a result, it was confirmed that the clad material of Sample No. 4 can be provided as a clad material that achieves a weight reduction of 50% or more compared to pure copper material (C1020) while suppressing electrical resistance to be small.

In Trial Production 5 (present invention example), clad basic materials of Basic Material No. 5 were prepared, a clad material of Sample No. 5 was formed, and was evaluated in the same manner as Trial Production 1. The clad basic materials were tempered such that ratios ($B_{AS}/B_{CS1}$, $B_{AS}/B_{CS2}$) of Vickers hardness between the copper plates and the aluminum plate became 1.7, and the plate thicknesses of the copper plates and the aluminum plate were selected such that ratios ($T_A/T_{C1}$, $T_A/T_{C2}$) of layer thickness between the copper layers and the aluminum layer of the clad material became 8. In this clad material, the total thickness was 1.70 mm, the average layer thickness of the copper layers was 0.18 mm, the average layer thickness of the aluminum layer was 1.35 mm, and the weight reduction rate compared to pure copper material (C1020) was 56%. In this clad material, the undulation value of the copper layers was 1.5, and no surface exposure of the aluminum layer was confirmed. Since the undulation value of the copper layers of this clad material is suppressed to the more preferable range of 2.0 or less, it is thought that an effective cross-sectional area for alternating current to flow is ensured. As a result, it was confirmed that the clad material of Sample No. 5 can be provided as a clad material that achieves a weight reduction of 50% or more compared to pure copper material (C1020) while suppressing electrical resistance to be small.

In Trial Production 6 (present invention example), clad basic materials of Basic Material No. 6 were prepared, a clad material of Sample No. 6 was formed, and was evaluated in the same manner as Trial Production 1. The clad basic materials were tempered such that ratios ($B_{AS}/B_{CS1}$, $B_{AS}/B_{CS2}$) of Vickers hardness between the copper plates and the aluminum plate became 1.7, and the plate thicknesses of the copper plates and the aluminum plate were selected such that ratios ($T_A/T_{C1}$, $T_A/T_{C2}$) of layer thickness between the copper layers and the aluminum layer of the clad material became 26. In this clad material, the total thickness was 1.70 mm, the average layer thickness of the copper layers was 0.06 mm, the average layer thickness of the aluminum layer was 1.58 mm, and the weight reduction rate compared to pure copper material (C1020) was 65%. In this clad material, the undulation value of the copper layers was 2.3, and no surface exposure of the aluminum layer was confirmed. Since the undulation value of the copper layers of this clad material is suppressed to a preferable range of 2.5 or less, it is thought that an effective cross-sectional area for alternating current to flow is ensured. As a result, it was confirmed that the clad material of Sample No. 6 can be provided as a clad material that achieves a weight reduction of 50% or more compared to pure copper material (C1020) while suppressing electrical resistance to be small.

In Trial Production 7 (present invention example), clad basic materials of Basic Material No. 7 were prepared, a clad material of Sample No. 7 was formed, and was evaluated in the same manner as Trial Production 1. The clad basic materials were tempered such that ratios ($B_{AS}/B_{CS1}$, $B_{AS}/B_{CS2}$) of Vickers hardness between the copper plates and the aluminum plate became 1.0, and the plate thicknesses of the copper plates and the aluminum plate were selected such that ratios ($T_A/T_{C1}$, $T_A/T_{C2}$) of layer thickness between the copper layers and the aluminum layer of the clad material became 8. In this clad material, the total thickness was 0.50 mm, the average layer thickness of the copper layers was 0.05 mm, the average layer thickness of the aluminum layer was 0.40 mm, and the weight reduction rate compared to pure copper material (C1020) was 56%. In this clad material, the undulation value of the copper layers was 1.8, and no surface exposure of the aluminum layer was confirmed. Since the undulation value of the copper layers of this clad material is suppressed to the more preferable range of 2.0 or less, it is thought that an effective cross-sectional area for alternating current to flow is ensured. As a result, it was confirmed that the clad material of Sample No. 7 can be provided as a clad material that achieves a weight reduction of 50% or more compared to pure copper material (C1020) while suppressing electrical resistance to be small.

In Trial Production 8 (present invention example), clad basic materials of Basic Material No. 8 were prepared, a clad material of Sample No. 8 was formed, and was evaluated in the same manner as Trial Production 1. The clad basic materials were tempered such that ratios ($B_{AS}/B_{CS1}$, $B_{AS}/B_{CS2}$) of Vickers hardness between the copper plates and the aluminum plate became 1.0, and the plate thicknesses of the copper plates and the aluminum plate were selected such that ratios ($T_A/T_{C1}$, $T_A/T_{C2}$) of layer thickness between the copper layers and the aluminum layer of the clad material became 26. In this clad material, the total thickness was 0.50 mm, the average layer thickness of the copper layers was 0.02 mm, the average layer thickness of the aluminum layer was 0.46 mm, and the weight reduction rate compared to pure copper material (C1020) was 65%. In this clad material, the undulation value of the copper layers was 3.0, and no surface exposure of the aluminum layer was confirmed. Since the undulation value of the copper layers of this clad material is suppressed to the range of 3.0 or less, it is thought that an effective cross-sectional area for alternating current to flow is ensured. As a result, it was confirmed that the clad material of Sample No. 8 can be provided as a clad material that achieves a weight reduction of 50% or more compared to pure copper material (C1020) while suppressing electrical resistance to be small.

In Trial Production 9 (present invention example), clad basic materials of Basic Material No. 9 were prepared, a clad material of Sample No. 9 was formed, and was evaluated in the same manner as Trial Production 1. The clad basic materials were tempered such that ratios ($B_{AS}/B_{CS1}$, $B_{AS}/B_{CS2}$) of Vickers hardness between the copper plates and the aluminum plate became 1.4, and the plate thicknesses of the copper plates and the aluminum plate were selected such that ratios ($T_A/T_{C1}$, $T_A/T_{C2}$) of layer thickness between the copper layers and the aluminum layer of the clad material became 8. In this clad material, the total thickness was 0.50 mm, the average layer thickness of the copper layers was 0.05 mm, the average layer thickness of the aluminum layer was 0.40 mm, and the weight reduction rate compared to pure copper material (C1020) was 56%. In this clad material, the undulation value of the copper layers was 1.7, and no surface exposure of the aluminum layer was confirmed. Since the undulation value of the copper layers of this clad material was suppressed to the more preferable range of 2.0 or less, it is thought that an effective cross-sectional area for alternating current to flow is ensured. As a result, it was confirmed that the clad material of Sample No. 9 can be provided as a clad material that achieves a weight reduction of 50% or more compared to pure copper material (C1020) while suppressing electrical resistance to be small.

In Trial Production 10 (present invention example), clad basic materials of Basic Material No. 10 were prepared, a clad material of Sample No. 10 was formed, and was evaluated in the same manner as Trial Production 1. The clad basic materials were tempered such that ratios ($B_{AS}/B_{CS1}$, $B_{AS}/B_{CS2}$) of Vickers hardness between the copper plates and the aluminum plate became 1.4, and the plate thicknesses of the copper plates and the aluminum plate were selected such that ratios ($T_A/T_{C1}$, $T_A/T_{C2}$) of layer thickness between the copper layers and the aluminum layer of the clad material became 26. In this clad material, the total thickness was 0.50 mm, the average layer thickness of the copper layers was 0.02 mm, the average layer thickness of the aluminum layer was 0.46 mm, and the weight reduction rate compared to pure copper material (C1020) was 65%. In this clad material, the undulation value of the copper layers was 2.6, and no surface exposure of the aluminum layer was confirmed. Since the undulation value of the copper layers of this clad material is suppressed to the range of 3.0 or less, it is thought that an effective cross-sectional area for alternating current to flow is ensured. As a result, it was confirmed that the clad material of Sample No. 10 can be provided as a clad material that achieves a weight reduction of 50% or more compared to pure copper material (C1020) while suppressing electrical resistance to be small.

In Trial Production 11 (present invention example), clad basic materials of Basic Material No. 11 were prepared, a clad material of Sample No. 11 was formed, and was evaluated in the same manner as Trial Production 1. The clad basic materials were tempered such that ratios ($B_{AS}/B_{CS1}$, $B_{AS}/B_{CS2}$) of Vickers hardness between the copper plates and the aluminum plate became 1.7, and the plate thicknesses of the copper plates and the aluminum plate were selected such that ratios ($T_A/T_{C1}$, $T_A/T_{C2}$) of layer thickness between the copper layers and the aluminum layer of the clad material became 8. In this clad material, the total thickness was 0.50 mm, the average layer thickness of the copper layers was 0.05 mm, the average layer thickness of the aluminum layer was 0.40 mm, and the weight reduction rate compared to pure copper material (C1020) was 56%. In this clad material, the undulation value of the copper layers was 1.5, and no surface exposure of the aluminum layer was confirmed. Since the undulation value of the copper layers of this clad material is suppressed to the more preferable range of 2.0 or less, it is thought that an effective cross-sectional area for alternating current to flow is ensured. As a result, it was confirmed that the clad material of Sample No. 11 can be provided as a clad material that achieves a weight reduction of 50% or more compared to pure copper material (C1020) while suppressing electrical resistance to be small.

In Trial Production 12 (present invention example), clad basic materials of Basic Material No. 12 were prepared, a clad material of Sample No. 12 was formed, and was evaluated in the same manner as Trial Production 1. The clad basic materials were tempered such that ratios ($B_{AS}/B_{CS1}$, $B_{AS}/B_{CS2}$) of Vickers hardness between the copper plates and the aluminum plate became 1.7, and the plate thicknesses of the copper plates and the aluminum plate were selected such that ratios ($T_A/T_{C1}$, $T_A/T_{C2}$) of layer thickness between the copper layers and the aluminum layer of the clad material became 26. In this clad material, the total thickness was 0.50 mm, the average layer thickness of the copper layers was 0.02 mm, the average layer thickness of the aluminum layer was 0.46 mm, and the weight reduction rate compared to pure copper material (C1020) was 65%. In this clad material, the undulation value of the copper layers was 2.3, and no surface exposure of the aluminum layer was confirmed. Since the undulation value of the copper layers of this clad material is suppressed to the preferable range of 2.5 or less, it is thought that an effective cross-sectional area for alternating current to flow is ensured. As a result, it was confirmed that the clad material of Sample No. 12 can be provided as a clad material that achieves a weight reduction of 50% or more compared to pure copper material (C1020) while suppressing electrical resistance to be small.

In Trial Production 13 (present invention example), clad basic materials of Basic Material No. 13 were prepared, a clad material of Sample No. 13 was formed, and was evaluated in the same manner as Trial Production 1. The clad basic materials were tempered such that ratios ($B_{AS}/B_{CS1}$, $B_{AS}/B_{CS2}$) of Vickers hardness between the copper plates and the aluminum plate became 0.5, and the plate thicknesses of the copper plates and the aluminum plate were selected such that ratios ($T_A/T_{C1}$, $T_A/T_{C2}$) of layer thickness between the copper layers and the aluminum layer of the clad material became 6. In this clad material, the total thickness was 1.72 mm, the average layer thickness of the copper layers was 0.22 mm, the average layer thickness of the aluminum layer was 1.29 mm, and the weight reduction rate compared to pure copper material (C1020) was 52%. In this clad material, the undulation value of the copper layers was 2.3, and no surface exposure of the aluminum layer was confirmed. Since the undulation value of the copper layers of this clad material is suppressed to the preferable range of 2.3 or less, it is thought that an effective cross-sectional area for alternating current to flow is ensured. As a result, it was confirmed that the clad material of Sample No. 13 can be provided as a clad material that achieves a weight reduction of 50% or more compared to pure copper material (C1020) while suppressing electrical resistance to be small. In the clad material of Sample No. 13 with a weight reduction rate of 52%, the ratios ($T_A/T_{C1}$, $T_A/T_{C2}$) of layer thickness between the copper layers and the aluminum layer are 6, and the proportion of aluminum in the clad material is relatively small. Thus, in this clad material, to achieve further weight reduction and cost reduction, the ratios ($T_A/T_{C1}$, $T_A/T_{C2}$) of layer thickness between the copper layers and the aluminum layer are preferably configured to be, for example, 7, 8, or 9 to increase the proportion of aluminum.

In Trial Production 14 (comparative example), clad basic materials of Basic Material No. 14 were prepared, a clad material of Sample No. 14 was formed, and was evaluated in the same manner as Trial Production 1. The clad basic materials were tempered such that ratios ($B_{AS}/B_{CS1}$, $B_{AS}/B_{CS2}$) of Vickers hardness between the copper plates and the aluminum plate became 0.5, and the plate thicknesses of the copper plates and the aluminum plate were selected such that ratios ($T_A/T_{C1}$, $T_A/T_{C2}$) of layer thickness between the copper layers and the aluminum layer of the clad material became 13. In this clad material, the total thickness was 1.72 mm, the average layer thickness of the copper layers was 0.12 mm, the average layer thickness of the aluminum layer was 1.49 mm, and the weight reduction rate compared to pure copper material (C1020) was 60%. In this clad material, the undulation value of the copper layers was 4.0, and surface exposure of the aluminum layer was confirmed. Since the undulation value of the copper layers of this clad material is not suppressed to the range of 3.0 or less, there is a possibility that an effective cross-sectional area for alternating current to flow is not ensured.

As a result, although the clad material of Sample No. 14 achieves a weight reduction of 50% or more compared to pure copper material (C1020), it was confirmed that the clad material cannot be provided as a good product because there is a possibility of increased electrical resistance and surface exposure of the aluminum layer was confirmed. In Trial Production 14, although the same materials C1020 and A1050 as in Trial Production 13 are combined, the undulation of the copper layers of the clad material was smaller in the case of Trial Production 13. This is thought to be because $T_A/T_{C1}$ and $T_A/T_{C2}$ of Trial Production 14 are clearly larger than those of Trial Production 13. Thus, it is thought that even with a configuration combining C1020 and A1050, a good product can still be provided by setting $T_A/T_{C1}$ and $T_A/T_{C2}$ to an appropriate range (preferably, 6 or more and 10 or less).

In Trial Production 15 (comparative example), clad basic materials of Basic Material No. 15 were prepared, a clad material of Sample No. 15 was formed, and was evaluated in the same manner as Trial Production 1. The clad basic materials were tempered such that ratios ($B_{AS}/B_{CS1}$, $B_{AS}/B_{CS2}$) of Vickers hardness between the copper plates and the aluminum plate became 1.0, and the plate thicknesses of the copper plates and the aluminum plate were selected such that ratios ($T_A/T_{C1}$, $T_A/T_{C2}$) of layer thickness between the copper layers and the aluminum layer of the clad material became 30. In this clad material, the total thickness was 1.68 mm, the average layer thickness of the copper layers was 0.05 mm, the average layer thickness of the aluminum layer was 1.58 mm, and the weight reduction rate compared to pure copper material (C1020) was 66%. In this clad material, the undulation value of the copper layers was 4.0, and surface exposure of the aluminum layer was confirmed. Since the undulation value of the copper layers of this clad material is not suppressed to the range of 3.0 or less, there is a possibility that an effective cross-sectional area for alternating current to flow is not ensured. As a result, although the clad material of Sample No. 15 achieves a weight reduction of 50% or more compared to pure copper material (C1020), it was confirmed that the clad material cannot be provided as a good product because there is a possibility of increased electrical resistance and surface exposure of the aluminum layer was confirmed.

In Trial Production 16 (comparative example), clad basic materials of Basic Material No. 16 were prepared, a clad material of Sample No. 16 was formed, and was evaluated in the same manner as Trial Production 1. The clad basic materials were tempered such that ratios ($B_{AS}/B_{CS1}$, $B_{AS}/B_{CS2}$) of Vickers hardness between the copper plates and the aluminum plate became 1.4, and the plate thicknesses of the copper plates and the aluminum plate were selected such that ratios ($T_A/T_{C1}$, $T_A/T_{C2}$) of layer thickness between the copper layers and the aluminum layer of the clad material became 30. In this clad material, the total thickness was 1.68 mm, the average layer thickness of the copper layers was 0.05 mm, the average layer thickness of the aluminum layer was 1.58 mm, and the weight reduction rate compared to pure copper material (C1020) was 66%. In this clad material, the undulation value of the copper layers was 3.8, and surface exposure of the aluminum layer was confirmed. Since the undulation value of the copper layers of this clad material is not suppressed to the range of 3.0 or less, there is a possibility that an effective cross-sectional area for alternating current to flow is not ensured. As a result, although the clad material of Sample No. 16 achieves a weight reduction of 50% or more compared to pure copper material (C1020), it was confirmed that the clad material cannot be provided as a good product because there is a possibility of increased electrical resistance and surface exposure of the aluminum layer was confirmed.

In Trial Production 17 (comparative example), clad basic materials of Basic Material No. 17 were prepared, a clad material of Sample No. 17 was formed, and was evaluated in the same manner as Trial Production 1. The clad basic materials were tempered such that ratios ($B_{AS}/B_{CS1}$, $B_{AS}/B_{CS2}$) of Vickers hardness between the copper plates and the aluminum plate became 1.7, and the plate thicknesses of the copper plates and the aluminum plate were selected such that ratios ($T_A/T_{C1}$, $T_A/T_{C2}$) of layer thickness between the copper layers and the aluminum layer of the clad material became 30. In this clad material, the total thickness was 1.68 mm, the average layer thickness of the copper layers was 0.05 mm, the average layer thickness of the aluminum layer was 1.58 mm, and the weight reduction rate compared to pure copper material (C1020) was 66%. In this clad material, the undulation value of the copper layers was 3.7, and surface exposure of the aluminum layer was confirmed. Since the undulation value of the copper layers of this clad material is not suppressed to the range of 3.0 or less, there is a possibility that an effective cross-sectional area for alternating current to flow is not ensured. As a result, although the clad material of Sample No. 17 achieves a weight reduction of 50% or more compared to pure copper material (C1020), it was confirmed that the clad material cannot be provided as a good product because there is a possibility of increased electrical resistance and surface exposure of the aluminum layer was confirmed.

In Trial Production 18 (comparative example), clad basic materials of Basic Material No. 18 were prepared, a clad material of Sample No. 18 was formed, and was evaluated in the same manner as Trial Production 1. The clad basic materials were tempered such that ratios ($B_{AS}/B_{CS1}$, $B_{AS}/B_{CS2}$) of Vickers hardness between the copper plates and the aluminum plate became 1.0, and the plate thicknesses of the copper plates and the aluminum plate were selected such that ratios ($T_A/T_{C1}$, $T_A/T_{C2}$) of layer thickness between the copper layers and the aluminum layer of the clad material became 30. In this clad material, the total thickness was 0.51 mm, the average layer thickness of the copper layers was 0.02 mm, the average layer thickness of the aluminum layer was 0.48 mm, and the weight reduction rate compared to pure copper material (C1020) was 66%. In this clad material, the undulation value of the copper layers was 4.0, and surface exposure of the aluminum layer was confirmed. Since the undulation value of the copper layers of this clad material is not suppressed to the range of 3.0 or less, there is a possibility that an effective cross-sectional area for alternating current to flow is not ensured. As a result, although the clad material of Sample No. 18 achieves a weight reduction of 50% or more compared to pure copper material (C1020), it was confirmed that the clad material cannot be provided as a good product because there is a possibility of increased electrical resistance and surface exposure of the aluminum layer was confirmed.

In Trial Production 19 (comparative example), clad basic materials of Basic Material No. 19 were prepared, a clad material of Sample No. 19 was formed, and was evaluated in the same manner as Trial Production 1. The clad basic materials were tempered such that ratios ($B_{AS}/B_{CS1}$, $B_{AS}/B_{CS2}$) of Vickers hardness between the copper plates and the aluminum plate became 1.4, and the plate thicknesses of the copper plates and the aluminum plate were selected such that ratios ($T_A/T_{C1}$, $T_A/T_{C2}$) of layer thickness between the copper layers and the aluminum layer of the clad material became 30. In this clad material, the total thickness was 0.51 mm, the average layer thickness of the copper layers was 0.02 mm, the average layer thickness of the aluminum layer was 0.48 mm, and the weight reduction rate compared to pure copper material (C1020) was 66%. In this clad material, the undulation value of the copper layers was 3.8, and surface exposure of the aluminum layer was confirmed. Since the undulation value of the copper layers of this clad material is not suppressed to the range of 3.0 or less, there is a possibility that an effective cross-sectional area for alternating current to flow is not ensured. As a result, although the clad material of Sample No. 19 achieves a weight reduction of 50% or more compared to pure copper material (C1020), it was confirmed that the clad material cannot be provided as a good product because there is a possibility of increased electrical resistance and surface exposure of the aluminum layer was confirmed.

In Trial Production 20 (comparative example), clad basic materials of Basic Material No. 20 were prepared, a clad material of Sample No. 20 was formed, and was evaluated in the same manner as Trial Production 1. The clad basic materials were tempered such that ratios ($B_{AS}/B_{CS1}$, $B_{AS}/B_{CS2}$) of Vickers hardness between the copper plates and the aluminum plate became 1.7, and the plate thicknesses of the copper plates and the aluminum plate were selected such that ratios ($T_A/T_{C1}$, $T_A/T_{C2}$) of layer thickness between the copper layers and the aluminum layer of the clad material became 30. In this clad material, the total thickness was 0.51 mm, the average layer thickness of the copper layers was 0.02 mm, the average layer thickness of the aluminum layer was 0.48 mm, and the weight reduction rate compared to pure copper material (C1020) was 66%. In this clad material, the undulation value of the copper layers was 3.7, and surface exposure of the aluminum layer was confirmed. Since the undulation value of the copper layers of this clad material is not suppressed to the range of 3.0 or less, there is a possibility that an effective cross-sectional area for alternating current to flow is not ensured. As a result, although the clad material of Sample No. 20 achieves a weight reduction of 50% or more compared to pure copper material (C1020), it was confirmed that the clad material cannot be provided as a good product because there is a possibility of increased electrical resistance and surface exposure of the aluminum layer was confirmed.

In Trial Production 21 (comparative example), clad basic materials of Basic Material No. 21 were prepared, a clad material of Sample No. 21 was formed, and was evaluated in the same manner as Trial Production 1. The clad basic materials were tempered such that ratios ($B_{AS}/B_{CS1}$, $B_{AS}/B_{CS2}$) of Vickers hardness between the copper plates and the aluminum plate became 1.3, and the plate thicknesses of the copper plates and the aluminum plate were selected such that ratios ($T_A/T_{C1}$, $T_A/T_{C2}$) of layer thickness between the copper layers and the aluminum layer of the clad material became 30. In this clad material, the total thickness was 1.68 mm, the average layer thickness of the copper layers was 0.05 mm, the average layer thickness of the aluminum layer was 1.58 mm, and the weight reduction rate compared to pure copper material (C1020) was 66%. In this clad material, the undulation value of the copper layers was 5.5, and surface exposure of the aluminum layer was confirmed. Since the undulation value of the copper layers of this clad material is not suppressed to the range of 3.0 or less, there is a possibility that an effective cross-sectional area for alternating current to flow is not ensured. As a result, although the clad material of Sample No. 21 achieves a weight reduction of 50% or more compared to pure copper material (C1020), it was confirmed that the clad material cannot be provided as a good product because there is a possibility of increased electrical resistance and surface exposure of the aluminum layer was confirmed.

In Trial Production 22 (comparative example), clad basic materials of Basic Material No. 22 were prepared, a clad material of Sample No. 22 was formed, and was evaluated in the same manner as Trial Production 1. The clad basic materials were tempered such that ratios ($B_{AS}/B_{CS1}$, $B_{AS}/B_{CS2}$) of Vickers hardness between the copper plates and the aluminum plate became 0.5, and the plate thicknesses of the copper plates and the aluminum plate were selected such that ratios ($T_A/T_{C1}$, $T_A/T_{C2}$) of layer thickness between the copper layers and the aluminum layer of the clad material became 4. In this clad material, the total thickness was 1.70 mm, the average layer thickness of the copper layers was 0.28 mm, the average layer thickness of the aluminum layer was 1.13 mm, and the weight reduction rate compared to pure copper material (C1020) was 47%. In this clad material, the undulation value of the copper layers was 2.6, and no surface exposure of the aluminum layer was confirmed. Since the undulation value of the copper layers of this clad material is suppressed to the range of 3.0 or less, it is thought that an effective cross-sectional area for alternating current to flow is ensured. In the clad material of Sample No. 22, although no surface exposure of the aluminum layer was confirmed, a weight reduction of 50% or more is not achieved compared to pure copper material (C1020). Thus, for example, in the case of being provided as a conductor suitable for alternating current, there is room for improvement from the perspective of weight reduction and cost reduction.

In Trial Production 23 (present invention example), clad basic materials of Basic Material No. 23 were prepared, a clad material of Sample No. 23 was formed, and was evaluated in the same manner as Trial Production 1. The clad basic materials were tempered such that ratios ($B_{AS}/B_{CS1}$, $B_{AS}/B_{CS2}$) of Vickers hardness between the copper plates and the aluminum plate became 1.0, and the plate thicknesses of the copper plates and the aluminum plate were selected such that ratios ($T_A/T_{C1}$, $T_A/T_{C2}$) of layer thickness between the copper layers and the aluminum layer of the clad material became 15. In this clad material, the total thickness was 1.70 mm, the average layer thickness of the copper layers was 0.10 mm, the average layer thickness of the aluminum layer was 1.50 mm, and the weight reduction rate compared to pure copper material (C1020) was 62%. In this clad material, the undulation value of the copper layers was 1.9, and no surface exposure of the aluminum layer was confirmed. Since the undulation value of the copper layers of this clad material is suppressed to the more preferable range of 2.0 or less, it is thought that an effective cross-sectional area for alternating current to flow is ensured. As a result, it was confirmed that the clad material of Sample No. 23 can be provided as a clad material that achieves a weight reduction of 50% or more compared to pure copper material (C1020) while suppressing electrical resistance to be small.

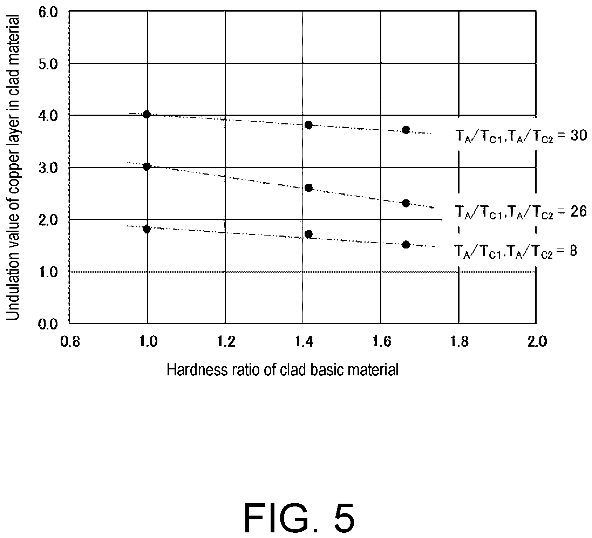

Herein, FIG. 5 is shown based on data of Basic Material No. (Sample No.) 1 to Basic Material No. 12 and Basic Material No. 15 to Basic Material No. 20, in which the material of the aluminum plate (aluminum layer) is equivalent to A5052. FIG. 5 is a graph showing a relationship between the hardness ratio of the clad basic materials and the undulation value of the copper layers of the clad material. Line segments (double-dot dashed lines) shown in FIG. 5 correspond to the ratios ($T_A/T_{C1}$, $T_A/T_{C2}$) of layer thickness between the copper layers and the aluminum layer of the clad material. In FIG. 5, a tendency is confirmed, in which as the hardness ratios ($B_{AS}/B_{CS1}$, $B_{AS}/B_{CS2}$) of the clad basic materials increase, the undulation value (the larger undulation value between $T_{C1MAX}/T_{C1MIN}$ and $T_{C2MAX}/T_{C2MIN}$) of the copper layers of the clad material decreases. Accordingly, it is learned that the hardness ratios of the clad basic materials affect the undulation value of the copper layers of the clad material. In addition, in FIG. 5, a remarkable tendency is confirmed, in which as the ratios ($T_A/T_{C1}$, $T_A/T_{C2}$) of layer thickness between the copper layers and the aluminum layer of the clad material are increased to enhance the weight reduction rate, the undulation value of the copper layers of the clad material increases. Accordingly, it is learned that the ratios of layer thickness of the clad material strongly affect the undulation value of the copper layers of the clad material.

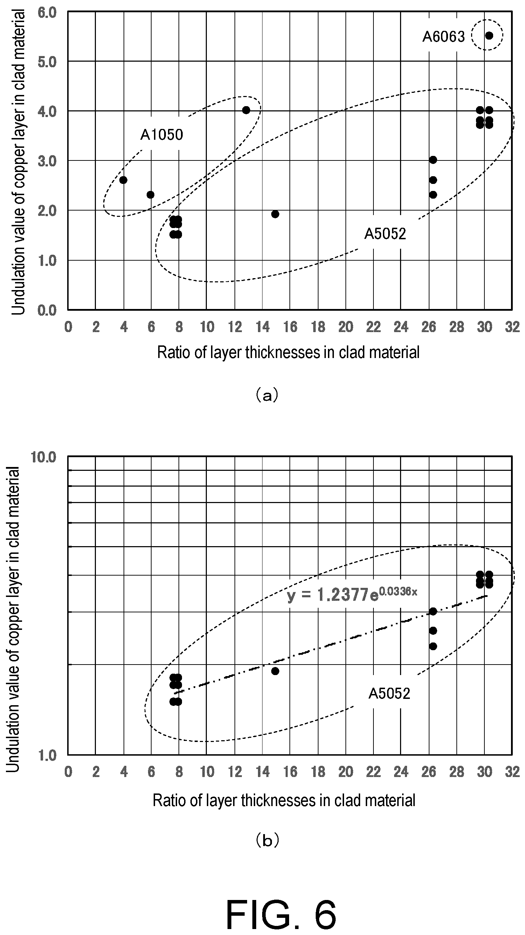

In addition, FIG. 6 is shown based on the data of Sample No. 1 to Sample No. 23. In FIG. 6, (a) is a graph showing a relationship between the ratios of layer thickness between the copper layers and the aluminum layer of the clad material, and the undulation value of the copper layers of the clad material. (b) is a graph using the data of A5052 shown in (a), with the vertical axis (ratios of layer thickness of clad material) replaced with a logarithmic scale. Ellipses (dotted enclosures) shown in (a) correspond to the material (A1050, A5052, A6063) of the aluminum layer of the clad material. In addition, line segments (double-dot dashed lines) shown in (b) represent an exponential approximation equation obtained from the plotted data. In A1050 and A5052 shown in FIG. 6(a) and (b), a remarkable tendency is confirmed, in which as the ratios of layer thickness of the clad material are increased to enhance the weight reduction rate, the undulation value of the copper layers of the clad material increases. This remarkable tendency shows an exponential change, and the approximation equation thereof is, for example, $y = 1.2065e^{0.0359x}$, when the ratios of layer thickness of the clad material are defined as x and the undulation value of the copper layers of the clad material is defined as y. Accordingly, it is learned that the ratios of layer thickness between the copper layers and the aluminum layer of the clad material strongly affect the undulation value of the copper layers of the clad material.

In addition, as shown in FIG. 6(a), the distribution (refer to the enclosures indicated by dotted lines) of the undulation value of the copper layers of the clad material varies according to the difference in the hardness of the aluminum layer. For example, the distribution of the undulation value of the copper layers combined with A1050 is located on the left side of the graph. In addition, the distribution of the undulation value of the copper layers combined with A5052, which is harder than A1050, is located on the right side of the graph. From the perspective that the distribution of the undulation value of the copper layers of the clad material varies according to the difference in the hardness of the aluminum layer, for example, it is thought that the distribution of the undulation value of the copper layers of the clad material combined with A3003, which is harder than A1050 but softer than A5052, would be located in the vicinity of the middle between the enclosure of A1050 and the large enclosure of A5052 in the graph.

In addition, FIG. 7 is shown based on the data of Sample No. 1 to Sample No. 23. In FIG. 7, (a) is a graph showing a relationship between the total thickness ($T_P$) of the clad material and the undulation value of the copper layers of the clad material. (b) is a graph showing a relationship between the layer thicknesses ($T_{C1}$, $T_{C2}$) of the copper layers of the clad material and the undulation value of the copper layers of the clad material. (c) is a graph showing a relationship between the layer thickness ($T_A$) of the aluminum layer of the clad material and the undulation value of the copper layers of the clad material. In FIG. 7(a), (b), and (c), no tendency of corresponding change is confirmed in any of the total thickness of the clad material, the layer thicknesses of the copper layers, and the layer thickness of the aluminum layer with respect to the change in the undulation value of the copper layers of the clad material. Accordingly, it is learned that the total thickness of the clad material, the layer thicknesses of the copper layers, and the layer thickness of the aluminum layer do not have a correlative influence on the undulation value of the copper layers of the clad material.

Next, considering the case of providing the clad material according to the present invention as a conductor suitable for a current device for alternating current, such as a portable charger or a wireless power supply, the electrical resistance (AC impedance) of the clad material was evaluated. Specifically, finish rolling was performed on the clad materials of Sample No. 22 (comparative example) and Sample No. 23 (present invention example) shown in Table 2 to form clad materials of Sample No. 24 (comparative example), Sample No. 25 (comparative example), Sample No. 26 (present invention example), and Sample No. 27 (present invention example) shown in Table 3 with smaller total thicknesses. Using these clad materials of Sample No. 24 to Sample No. 27, measurement samples (15 mm wide, 150 mm long) were prepared. In addition, for comparison with the clad materials, measurement samples (reference examples) with the same thickness, width, and length as the measurement samples of the clad materials were prepared using plate materials of single materials shown in Table 4. AC impedance measurement was performed with an LCZ meter (four-terminal-pair method with a distance of 90 mm between voltage electrodes) under a room temperature (about 25°C) environment on the measurement samples (present invention examples, comparative examples) of the clad materials and the plate materials.

Table 3 and Table 4 show AC impedance values (average values) and AC volume resistivities. The AC volume resistivity is a calculated value obtained by dividing a product of an AC impedance value (average value) obtained by measurement and a cross-sectional area (total thickness × width 15 mm or plate thickness × width 15 mm) of the measurement sample, by a distance (90 mm) between the voltage electrodes during measurement. The measurements of the total thickness ($T_P$) of the clad material (sample), the layer thicknesses ($T_{C1}$, $T_{C2}$) of the copper layers, the layer thickness ($T_A$) of the aluminum layer, and the plate thickness of the plate material (sample) were performed in the same manner as in the case of the trial productions above.

[Table 3]

| Sample No. | Clad material (sample) | | | | Copper layer (first copper layer, second copper layer) | Aluminum layer | Weight reduction rate [%] | Impedance [mΩ] | | AC volume resistivity [mΩ•mm] | |
|---|---|---|---|---|---|---|---|---|---|---|---|
| | Finish rolling ratio [%] | Layer structure | Total thickness $T_P$ [mm] | Cross-sectional area [mm$^2$] | Layer thickness $T_{C1}$, $T_{C2}$ [mm] | Layer thickness $T_A$ [mm] | | 10 kHz | 100 kHz | 10 kHz | 100 kHz |
| 24 | 20 | C1020/A1050/ C1020 | 1.360 | 20.4 | 0.227 | 0.907 | 47 | 6.6 | 65 | 1.5 | 15 |
| 25 | 60 | C1020/A1050/ C1020 | 0.680 | 10.2 | 0.113 | 0.453 | 47 | 6.6 | 64 | 0.7 | 7 |
| 26 | 20 | C1020/A5052/ C1020 | 1.360 | 20.4 | 0.080 | 1.200 | 62 | 6.6 | 64 | 1.5 | 15 |
| 27 | 60 | C1020/A5052/ C1020 | 0.680 | 10.2 | 0.040 | 0.600 | 62 | 6.6 | 64 | 0.7 | 7 |

[Table 4]

| Sample No. | Plate material (sample) | | | Impedance [mΩ] | | AC volume resistivity [mΩ•mm] | |
|---|---|---|---|---|---|---|---|
| | Material | Plate thickness [mm] | Cross-sectional area [mm$^2$] | 10 kHz | 100 kHz | 10 kHz | 100 kHz |
| 28 | C1020 | 1.360 | 20.4 | 6.3 | 63 | 1.4 | 14 |
| 29 | C1020 | 0.680 | 10.2 | 6.4 | 63 | 0.7 | 7 |
| 30 | A1050 | 1.360 | 20.4 | 6.3 | 63 | 1.4 | 14 |
| 31 | A1050 | 0.680 | 10.2 | 6.4 | 63 | 0.7 | 7 |

<AC impedance value>

In Table 3, Sample No. 24 and Sample No. 25 using A1050 are comparative examples in which $T_A/T_{C1}$ and $T_A/T_{C2}$ are about 4 (1:4:1) and the weight reduction rate is 47%. In addition, Sample No. 26 and Sample No. 27 using A5052 are present invention examples in which $T_A/T_{C1}$ and $T_A/T_{C2}$ are about 15 (1:15:1) and the weight reduction rate is 62%. The clad materials of Sample No. 24 (comparative example) and Sample No. 26 (present invention example) have different weight reduction rates and different materials of the aluminum layer, but have a same total thickness of 1.360 mm. In addition, the clad materials of Sample No. 25 (comparative example) and Sample No. 27 (present invention example) have different weight reduction rates and different materials of the aluminum layer, but have a same total thickness of 0.680 mm.
As shown in Table 3, the AC impedance values of the clad materials of Sample No. 24 to Sample No. 27 were 6.6 mΩ, which is equal to or less than 10 mΩ, at 10 kHz, and were 64 mΩ to 65 mΩ, which is equal to or less than 100 mΩ, at 100 kHz. Accordingly, it was found that the AC impedance value of the clad material increases as the frequency of the alternating current becomes higher in the case where the total thickness thereof is approximately 0.5 mm to 2.0 mm, more specifically 0.5 mm to 1.5 mm. In addition, it was found that the AC impedance value of the clad material has low sensitivity to changes in the total thickness of the clad material, the weight reduction rate, and the material of the aluminum layer, and the substantial variation is sufficiently small.
In addition, in Table 4, Sample No. 28 to Sample No. 30 are reference examples made of plate materials of single materials. The plate materials of single materials of Sample No. 28 and Sample No. 30 have different materials but have a same plate thickness of 1.360 mm. In addition, the plate materials of single materials of Sample No. 29 and Sample No. 31 have different materials but have a same total thickness of 0.680 mm. In addition, the plate materials of single materials of Sample No. 28 and Sample No. 29 have different plate thicknesses but have a same material equivalent to C1020. In addition, the plate materials of single materials of Sample No. 30 and Sample No. 31 have different plate thicknesses but have a same material equivalent to A1050.
As shown in Table 4, the AC impedance values of the plate materials of single materials of Sample No. 28 to Sample No. 31 were all 6.3 mΩ to 6.4 mΩ at 10 kHz, and were 63 mΩ at 100 kHz. Accordingly, it was found that the AC impedance value of the plate material of a single material increases as the frequency of the alternating current becomes higher. In addition, it was found that the AC impedance value of the plate material of a single material has low sensitivity to changes in the plate thickness and the material, and the substantial variation is sufficiently small.
As described above, the AC impedance values of the clad materials shown in Table 3 are equal to or less than 10 mΩ at 10 kHz and are equal to or less than 100 mΩ at 100 kHz, and are nearly equal to those of the plate materials of single materials equivalent to C1020 shown in Table 4. Thus, in practical use from the vicinity of 10 kHz to the vicinity of 100 kHz, clad materials with AC impedance values nearly equal to those of plate materials (pure copper materials) equivalent to C1020 can be said to be sufficiently practical. Accordingly, it was confirmed that the clad material according to the present invention has an electrical resistance suppressed to be small at a same level as the plate material (pure copper material) equivalent to C1020 and may be used as a conductor.

<AC volume resistivity>

In Table 3, in the clad materials of Sample No. 24 (comparative example) and Sample No. 26 (present invention example) which have different weight reduction rates and different materials of the aluminum layer but have a same total thickness of 1.360 mm, the AC volume resistivities were 1.5 mΩ•mm, which is equal to or less than 2 mΩ•mm, at 10 kHz, and were 15 mΩ•mm, which is equal to or less than 20 mΩ•mm, at 100 kHz. In addition, in the clad materials of Sample No. 25 (comparative example) and Sample No. 27 (present invention example) which have different weight reduction rates and different materials of the aluminum layer but have a same total thickness of 0.680 mm, the AC volume resistivities were 0.7 mΩ•mm, which is equal to or less than 1 mΩ•mm, at 10 kHz, and were 7 mΩ•mm, which is equal to or less than 10 mΩ•mm, at 100 kHz.

Accordingly, it was found that the AC volume resistivity of the clad material increases as the total thickness of the clad material increases, and increases as the frequency of the alternating current becomes higher, in the case where the total thickness of the clad material is approximately 0.5 mm to 2.0 mm, more specifically 0.5 mm to 1.5 mm. In addition, it was found that the AC volume resistivity of the clad material has low sensitivity to changes in the weight reduction rate of the clad material and the material of the aluminum layer, and the substantial variation is sufficiently small. In addition, as shown in Table 3, the AC volume resistivity of the clad material does not vary whether C1020 is combined with A1050 which has a conductivity of about 60% IACS or with A5052 which has a conductivity of about 35% IACS. Thus, it is thought that the AC volume resistivity of the clad material does not vary whether C1020 is combined with, for example, A3003 which has a conductivity of about 40 to 50% IACS or with A6063 which has a conductivity of about 55% IACS.

In addition, in Table 4, the AC volume resistivities of the plate materials of single materials of Sample No. 28 (reference example) and Sample No. 30 (reference example), which have different materials but have a same plate thickness of 1.360 mm, were 1.4 mΩ•mm, which is equal to or less than 2 mΩ•mm, at 10 kHz, and were 14 mΩ•mm, which is equal to or less than 20 mΩ•mm, at 100 kHz. In addition, the AC volume resistivities of the plate materials of single materials of Sample No. 29 (reference example) and Sample No. 31 (reference example), which have different materials but have a same plate thickness of 0.680 mm, were 0.7 mΩ•mm, which is equal to or less than 1 mΩ•mm, at 10 kHz, and were 7 mΩ•mm, which is equal to or less than 10 mΩ•mm, at 100 kHz.

Accordingly, it was found that the AC volume resistivity of the plate material of a single material increases as the plate thickness of the plate material increases, and increases as the frequency of the alternating current becomes higher. In addition, it was found that the AC volume resistivity of the plate material of a single material has low sensitivity to changes in the material of the plate material, and the substantial variation is sufficiently small.

According to the above, it was confirmed that the AC volume resistivities of the clad materials shown in Table 3 and the plate materials of single materials shown in Table 4 are nearly equal values if the overall thickness (total thickness in the case of clad material, plate thickness in the case of pure copper material) and the frequency are equal. Specifically, the AC volume resistivities of the clad materials and the plate materials of single materials with an overall thickness of 0.680 mm were equal to or less than 1 mΩ•mm at 10 kHz and were equal to or less than 10 mΩ•mm at 100 kHz. In addition, the AC volume resistivities of the clad materials and the plate materials of single materials with an overall thickness of 1.360 mm were equal to or less than 10 mΩ•mm at 10 kHz and were equal to or less than 100 mΩ•mm at 100 kHz. Accordingly, it was confirmed that, in practical use from the vicinity of 10 kHz to the vicinity of 100 kHz, since the clad material has an AC volume resistivity nearly equal to that of the plate material (pure copper material) equivalent to C1020, the electrical resistance is suppressed to be small at a same level as the plate material (pure copper material) equivalent to C1020, and the clad material may be used as a conductor.

Accordingly, it was learned that it is possible to estimate a tendency of change in the AC volume resistivity with respect to the total thickness of the clad material using the total thickness and the AC volume resistivity of the clad material described above. For example, when the total thickness of the clad material is $T_P$, the change amount thereof is $\Delta T_P$, the AC volume resistivity is $R_V$, and the change amount thereof is $\Delta R_V$, the tendency of change in the AC volume resistivity with respect to the total thickness of the clad material is conveniently expressed as a linear approximation equation $R_V = \Delta R_V/\Delta T_P \times T_P$. Based on this equation, in the case of 10 kHz, according to Table 3, when $X_P$ is 0.680 mm, $R_V$ is 0.7 mΩ•mm, and when $X_P$ is 1.360 mm, $R_V$ is 1.5 mΩ•mm, so $\Delta R_V/\Delta T_P$ is obtained to be about 1.2. Then, using this value of $\Delta R_V/\Delta T_P$, when $X_P$ is 0.500 mm, $R_V$ is obtained to be about 0.6 mΩ•mm, and when $X_P$ is 2.000 mm, $R_V$ is obtained to be about 2.4 mΩ•mm. Similarly, in the case of 100 kHz, according to Table 3, when $X_P$ is 0.680 mm, $R_V$ is 7 mΩ•mm, and when $X_P$ is 1.360 mm, $R_V$ is 15 mΩ•mm, so $\Delta R_V/\Delta T_P$ is obtained to be about 12. Then, using this value of $\Delta R_V/\Delta T_P$, when $X_P$ is 0.500 mm, $R_V$ is obtained to be about 6 mΩ•mm, and when $X_P$ is 2.000 mm, $R_V$ is obtained to be about 24 mΩ•mm.

From the perspective of considering the tendency of change described above, in the case where the total thickness ($T_P$) of the clad material is approximately 0.5 mm or more to 2.0 mm, more specifically 0.5 mm to 1.5 mm, the AC volume resistivity of the clad material becomes 10 mΩ•mm or less at 10 kHz, and becomes 100 mΩ•mm or less at 100 kHz. The AC volume resistivity of this level is sufficiently small for applications as a conductor for alternating current. In practical use from the vicinity of 10 kHz to the vicinity of 100 kHz, the clad material having an AC volume resistivity nearly equal to that of the plate material (pure copper material) equivalent to C1020 may be said to be sufficiently practical. In addition, in practical use, in the case of using the clad material as a conductor for alternating current, the clad material may be used if the AC volume resistivity of the clad material is 20 mΩ•mm or less (preferably 15 mΩ•mm or less, more preferably 10 mΩ•mm or less) at 10 kHz, and the clad material may be used if the AC volume resistivity of the clad material is 200 mΩ•mm or less (preferably 150 mΩ•mm or less, more preferably 100 mΩ•mm or less) at 100 kHz.

Reference Signs List

1: clad material
11: copper layer (first copper layer)
12: copper layer (second copper layer)
13: aluminum layer
14a: diffusion layer
14b: diffusion layer
$T_P$: thickness of clad material (average total thickness)
$T_A$: average layer thickness of aluminum layer
$T_{C1}$: average layer thickness of copper layer (first copper layer)
$T_{C1MAX}$: maximum layer thickness of copper layer (first copper layer)
$T_{C1MIN}$: minimum layer thickness of copper layer (first copper layer)
$T_{C2}$: average layer thickness of copper layer (second copper layer)
$T_{C2MAX}$: maximum layer thickness of copper layer (second copper layer)
$T_{C2MIN}$: minimum layer thickness of copper layer (second copper layer)

**Claims**

1. A clad material comprising a first copper layer, an aluminum layer, and a second copper layer sequentially laminated and pressure-bonded, wherein
   in a case where an average total thickness of the clad material is $T_P$, an average layer thickness of the aluminum layer is $T_A$, an average layer thickness of the first copper layer is $T_{C1}$, a maximum layer thickness and a minimum layer thickness of the first copper layer in a measurement target range of the average layer thickness $T_{C1}$ are $T_{C1MAX}$ and $T_{C1MIN}$, an average layer thickness of the second copper layer is $T_{C2}$, and a maximum layer thickness and a minimum layer thickness of the second copper layer in a measurement target range of the average layer thickness $T_{C2}$ are $T_{C2MAX}$ and $T_{C2MIN}$, the clad material satisfies $0.5\,\text{mm} \leq T_P \leq 2.0\,\text{mm}$, satisfies $6 \leq T_A/T_{C1} \leq 26$ and $6 \leq T_A/T_{C2} \leq 26$, and satisfies $1.0 \leq T_{C1MAX}/T_{C1MIN} \leq 3.0$ and $1.0 \leq T_{C2MAX}/T_{C2MIN} \leq 3.0$.

2. The clad material according to claim 1, wherein an AC impedance value of a sample with a width of 15 mm is measured under a room temperature environment according to a four-terminal-pair method with a distance of 90 mm between voltage electrodes, and an AC volume resistivity obtained using the AC impedance value with a frequency of alternating current being 10 kHz is 20 mΩ•mm or less.

3. The clad material according to claim 1, wherein an AC impedance value of a sample with a width of 15 mm is measured under a room temperature environment according to a four-terminal-pair method with a distance of 90 mm between voltage electrodes, and an AC volume resistivity obtained using the AC impedance value with a frequency of alternating current being 100 kHz is 200 mΩ•mm or less.

4. The clad material according to claim 1, wherein the aluminum layer comprises an A3000 series aluminum alloy of JIS standard containing Mn, an A5000 series aluminum alloy of JIS standard containing Mg, or an A6000 series aluminum alloy of JIS standard containing Mg and Si.

5. A clad material manufacturing method comprising a preparation process of clad basic materials and a rolling process of a clad material, wherein

   in the preparation process of the clad basic materials, a first copper plate, an aluminum plate, and a second copper plate are prepared, wherein in a case where an average plate thickness of the first copper plate is $T_{CS1}$ and a Vickers hardness of the first copper plate is $B_{CS1}$, an average plate thickness of the aluminum plate is $T_{AS}$ and a Vickers hardness of the aluminum plate is $B_{AS}$, and an average plate thickness of the second copper plate is $T_{CS2}$ and a Vickers hardness of the second copper plate is $B_{CS2}$, the first copper plate, the aluminum plate, and the second copper plate satisfy $6 \leq T_{AS}/T_{CS1} \leq 26$ and $6 \leq T_{AS}/T_{CS2} \leq 26$ and satisfy $B_{AS}/B_{CS1} \geq 1.0$ and $B_{AS}/B_{CS2} \geq 1.0$,
   in the rolling process of the clad material, rolling is performed on the first copper plate, the aluminum plate, and the second copper plate prepared in the preparation process of the clad basic materials in a sequentially laminated state to form a clad material in which a first copper layer corresponding to the first copper plate after rolling, an aluminum layer corresponding to the aluminum plate after rolling, and a second copper layer corresponding to the second copper plate after rolling are sequentially laminated and pressure-bonded, wherein in a case where a Vickers hardness of the first copper layer is $B_{C1}$, a Vickers hardness of the aluminum layer is $B_A$, and a Vickers hardness of the second copper layer is $B_{C2}$, the rolling is performed such that $B_A/B_{C1} \geq 0.5$ and $B_A/B_{C2} \geq 0.5$ are satisfied, and

in a case where an average total thickness of the clad material is $T_P$, an average layer thickness of the aluminum layer is $T_A$, an average layer thickness of the first copper layer is $T_{C1}$, a maximum layer thickness and a minimum layer thickness of the first copper layer in a measurement target range of the average layer thickness $T_{C1}$ are $T_{C1MAX}$ and $T_{C1MIN}$, an average layer thickness of the second copper layer is $T_{C2}$, and a maximum layer thickness and a minimum layer thickness of the second copper layer in a measurement target range of the average layer thickness $T_{C2}$ are $T_{C2MAX}$ and $T_{C2MIN}$, the clad material manufacturing method configures the clad material which satisfies $0.5 \text{ mm} \leq T_P \leq 2.0 \text{ mm}$, satisfies $6 \leq T_A/T_{C1} \leq 26$ and $6 \leq T_A/T_{C2} \leq 26$, and satisfies $1.0 \leq T_{C1MAX}/T_{C1MIN} \leq 3.0$ and $1.0 \leq T_{C2MAX}/T_{C2MIN} \leq 3.0$.

6. The clad material manufacturing method according to claim 5, wherein in the rolling process of the clad material, rolling is performed such that $1.0 \leq T_{C1MAX}/T_{C1MIN} \leq 2.5$ and $1.0 \leq T_{C2MAX}/T_{C2MIN} \leq 2.5$ are satisfied, to form the clad material in which the first copper layer, the aluminum layer, and the second copper layer are sequentially laminated and pressure-bonded.

7. The clad material manufacturing method according to claim 5, wherein the aluminum plate comprises an A3000 series aluminum alloy of JIS standard containing Mn, an A5000 series aluminum alloy of JIS standard containing Mg, or an A6000 series aluminum alloy of JIS standard containing Mg and Si.

$$T_P = T_{C1} + T_A + T_{C2}$$

FIG. 1

FIG. 2

Clad material

Copper layer

Aluminum layer

Copper layer

Rolling direction (X direction)

1 mm

(a) C1020/A1050/C1020 (total thickness 1.00 mm, ratio of layer thickness 1:4:1)

Clad material

Copper layer

Aluminum layer

Copper layer

Rolling direction (X direction)

1 mm

(b) C1020/A5052/C1020 (total thickness 1.7 mm, ratio of layer thickness 1:23:1)

# FIG. 3

```
┌─────────────────────────────┐
│  Preparation process of clad basic  │
│            materials            │
└─────────────────────────────┘
               │
               ▼
   First copper plate, aluminum plate,
        second copper plate
               │
               ▼
┌─────────────────────────────┐
│   Rolling process of clad material   │
└─────────────────────────────┘
```

Clad material
(average total thickness is the same
as final product)

Clad intermediate material
(average total thickness is larger
than final product)

Selective process
• Heat treatment (diffusion annealing)
• Heat treatment (softening annealing)
• Surface treatment
• Slitting process, etc.

Clad material
(final product)

# FIG. 4

FIG. 5

(a)

$y = 1.2377e^{0.0336x}$

(b)

FIG. 6

(a)

(b)

(c)

FIG. 7

## INTERNATIONAL SEARCH REPORT

| International application No. |
|---|
| **PCT/JP2023/025821** |

| A. | CLASSIFICATION OF SUBJECT MATTER |
|---|---|

***B21B 1/22***(2006.01)i; ***B21B 3/00***(2006.01)i; ***B23K 20/04***(2006.01)i; ***B32B 15/01***(2006.01)i
FI:     B21B1/22 B; B32B15/01 G; B21B3/00 J; B21B3/00 L; B23K20/04 D; B23K20/04 B

According to International Patent Classification (IPC) or to both national classification and IPC

| B. | FIELDS SEARCHED |
|---|---|

Minimum documentation searched (classification system followed by classification symbols)

B21B1/22; B21B3/00; B23K20/04; B32B15/01

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2018/147297 A1 (TOYO KOHAN CO., LTD.) 16 August 2018 (2018-08-16) claims, paragraphs [0015]-[0026], [0038]-[0041], table 1 | 1-4 |
| A | | 5-7 |
| Y | JP 2013-143257 A (TOYOTA JIDOSHA KABUSHIKI KAISHA) 22 July 2013 (2013-07-22) paragraphs [0006]-[0013], [0018]-[0026] | 1-4 |
| A | | 5-7 |
| A | CN 104498780 A (WU, Jun) 08 April 2015 (2015-04-08) paragraphs [0006]-[0013] | 1-7 |
| A | KR 10-2016-0129564 A (KOREA CLAD TECH CO., LTD.) 09 November 2016 (2016-11-09) entire text, all drawings | 1-7 |
| A | US 2004/0137260 A1 (CLAD METALS LLC) 15 July 2004 (2004-07-15) entire text, all drawings | 1-7 |
| A | CN 202217544 U (GUANGZHOU ADVANCE-TECH CO., LTD.) 09 May 2012 (2012-05-09) entire text, all drawings | 1-7 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 September 2023** | **03 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/025821**

| Patent document cited in search report | | | Publication date (day/month/year) | Patent family member(s) | | | Publication date (day/month/year) |
|---|---|---|---|---|---|---|---|
| WO | 2018/147297 | A1 | 16 August 2018 | US claims, paragraphs [0020]-[0031], [0042]-[0044], table 1 | 2020/0031096 | A1 | |
| | | | | CN | 110234443 | A | |
| | | | | KR | 10-2019-0116243 | A | |
| JP | 2013-143257 | A | 22 July 2013 | US paragraphs [0008]-[0026], [0030]-[0042] | 2013/0175071 | A1 | |
| | | | | CN | 103208320 | A | |
| CN | 104498780 | A | 08 April 2015 | CN | 105568073 | A | |
| | | | | CN | 105632584 | A | |
| KR | 10-2016-0129564 | A | 09 November 2016 | (Family: none) | | | |
| US | 2004/0137260 | A1 | 15 July 2004 | (Family: none) | | | |
| CN | 202217544 | U | 09 May 2012 | (Family: none) | | | |

Form PCT/ISA/210 (patent family annex) (January 2015)

35

## EP 4 566 732 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013143257 A

**Non-patent literature cited in the description**

- Flow Curves of Some Aluminum and Its Alloys. **KENJI NAKANISHI** ; **SHUNPEI KAMITANI** ; **KOUKI NAKAHARA** ; **YOSHIKAZU SHIMIZU** ; **TAKEHIKO MATSUDA**. The research reports of the Faculty of Engineering. Kagoshima University, 1999, 1-5